# EUROPEAN PATENT APPLICATION

(11) **EP 4 797 766 A1**
(43) Date of publication of application: **26.08.2026**
(21) Application number: 24887468.7
(22) Date of filing: 19.07.2024
(51) Int. Cl.: H04W 16/32

(54) **COMMUNICATION METHOD AND APPARATUS**

(30) Priority: 07.11.2023 CN 202311479891
(71) Applicant: HUAWEI TECHNOLOGIES CO., LTD., Shenzhen 518129 (CN)
(72) Inventor: ZHOU, Zhi, Shenzhen, Guangdong 518129 (CN); HE, Jia, Shenzhen, Guangdong 518129 (CN); ZHANG, Xi, Shenzhen, Guangdong 518129 (CN)
(74) Representative: Isarpatent
(86) International application number: PCT/CN2024/106573
(87) International publication number: WO 2025/097844

(57) **Abstract**

This application provides a communication method and apparatus, relating to the field of communication technologies. The method includes: A terminal device receives radio frequency channel data of M first regions, where M is an integer greater than or equal to 2; the terminal device sends a first request based on the radio frequency channel data of the M first regions, where the first request is used to request radio frequency channel data of N second regions, N is an integer greater than or equal to 2, the N second regions are determined based on the M first regions, an area of each of the N second regions is less than an area of each of the M first regions, and a level corresponding to the N second regions is higher than a level corresponding to the M first regions; and the terminal device receives the radio frequency channel data of the N second regions.

## Description

This application claims priority to Chinese Patent Application No. 202311479891.9, filed with the China National Intellectual Property Administration on November 7, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In communication systems, a hot research direction of sensing-assisted communication is to obtain environment information by using wireless sensing technologies, to assist channel prediction, positioning, and the like. In a sensing-assisted communication process, a network device sends radio frequency channel data to a terminal device, for the terminal device to perform positioning, channel prediction, and the like based on the radio frequency channel data.

However, a data amount of the radio frequency channel data is large, resulting in heavy communication pressure between the network device and the terminal device.

### SUMMARY

To resolve the foregoing technical problem, this application provides a communication method and apparatus, to reduce communication pressure between a network device and a terminal device.

To achieve the foregoing objective, the following technical solutions are used in this application:
According to a first aspect, a communication method is provided. The method may be performed by a terminal device. The terminal device may be the terminal device itself, or may be a processor, a module, a chip, a chip system, or the like that is in the terminal device and that implements the method. The method includes: The terminal device receives radio frequency channel data of M first regions, where M is an integer greater than or equal to 2; the terminal device sends a first request based on the radio frequency channel data of the M first regions, where the first request is used to request radio frequency channel data of N second regions, N is an integer greater than or equal to 2, the N second regions are determined based on the M first regions, and an area of each of the N second regions is less than an area of each of the M first regions; and the terminal device receives the radio frequency channel data of the N second regions.

That the area of each of the N second regions is less than the area of each of the M first regions may be understood as follows: Granularities of the N second regions are less than granularities corresponding to the M first regions.

In other words, the terminal device first receives the radio frequency channel data of the M first regions, and then determines, based on the radio frequency channel data of the M first regions, to send the first request, to request the radio frequency channel data of the N second regions. Then, the terminal device receives the radio frequency channel data of the N second regions. It can be learned that the terminal device receives the radio frequency channel data at least twice.

The N second regions are determined based on the M first regions. For example, a geographic region covered by the N second regions is a geographic region covered by K first regions in the M first regions, where K is a positive integer less than M. The K first regions may be understood as regions of interest of the terminal device in the M first regions. In addition, that the area of each of the N second regions is less than the area of each of the M first regions may be understood as follows: The N second regions are regions at a finer granularity with smaller sizes.

In this way, the terminal device requests, via the first request, radio frequency channel data of regions of interest (for example, the K first regions) of the terminal device at a finer granularity, and then receives the corresponding radio frequency channel data at the finer granularity, instead of receiving 'the radio frequency channel data of the M first regions at the finer granularity' at a time. This reduces communication pressure.

In a possible design, that the N second regions are determined based on the M first regions includes:

A geographic region constituted by the K first regions in the M first regions is a first geographic region, where each of the K first regions overlaps one of the N second regions, and K is a positive integer less than M; a geographic region constituted by the N second regions is a second geographic region; and
the first geographic region is the same as the second geographic region; or the first geographic region is different from the second geographic region, and the first geographic region includes the second geographic region; or the first geographic region is different from the second geographic region, and the second geographic region includes the first geographic region.

That the first geographic region is the same as the second geographic region may be understood as follows: A geographic region covered by the K first regions is divided at a finer granularity, to obtain the N second regions.

In this way, the first geographic region and the second geographic region have equivalent coverage, and the terminal device may obtain radio frequency channel data of the K first regions at a finer granularity, to implement precise positioning.

That the first geographic region includes the second geographic region may be understood as follows: The first geographic region is scaled down by a specific proportion, and then a scaled-down geographic region is further divided at a finer granularity, to obtain the N second regions.

In this way, compared with the first geographic region, the second geographic region is scaled down by a specific proportion. Correspondingly, a quantity of regions with a finer granularity (namely, the second regions) relatively decreases, and the terminal device may obtain radio frequency channel data of a small quantity of regions with a finer granularity. This accelerates convergence and improves processing efficiency of positioning.

That the second geographic region includes the first geographic region may be understood as follows: The first geographic region is scaled up by a specific proportion, and then a scaled-up geographic region is further divided at a finer granularity, to obtain the N second regions.

In this way, compared with the first geographic region, the second geographic region is scaled up by a specific proportion. Correspondingly, a quantity of regions with a finer granularity (namely, the second regions) relatively increases, and the terminal device may obtain radio frequency channel data of a large quantity of regions with a finer granularity. This reduces, to some extent, a possibility of missing radio frequency channel data of a region, thereby improving positioning accuracy.

In a possible design, that the terminal device sends the first request based on the radio frequency channel data of the M first regions includes: The terminal device determines M first function values based on the radio frequency channel data of the M first regions, where an Mᵢ^{th} first function value among the M first function values represents a difference between first measurement data and radio frequency channel data of an Mᵢ^{th} first region among the M first regions, the first measurement data indicates a signal measurement result, and Mᵢ is an integer that ranges from 1 to M;
the terminal device determines the K first regions based on the M first function values; and
the terminal device sends the first request based on the K first regions.

That the first measurement data indicates the signal measurement result may be understood as a measurement result obtained by the terminal device by measuring a signal like a reference signal or a data signal.

In other words, the terminal device determines, based on differences between the first measurement data and the radio frequency channel data of the M first regions, the regions of interest of the terminal device, namely, the K first regions, and then requests the radio frequency channel data of the K first regions at the finer granularity via the first request, to implement a plurality of transmissions of the radio frequency channel data, thereby reducing an amount of the transmitted radio frequency channel data.

In a possible design, the M first function values are sorted in ascending order, and each of the M first function values is a positive value. Alternatively, the M first function values are sorted in descending order, and each of the M first function values is a negative value. Alternatively, absolute values of the M first function values are sorted in ascending order, and the first K first function values among the M first function values one-to-one correspond to the K first regions.

In other words, among the M first function values, a smaller difference represented by a first function value ranked higher, namely, a smaller difference between the first measurement data and radio frequency channel data of a region indicates a higher possibility that the terminal device is interested in the region, for example, a higher possibility that the terminal device is located in the region.

In a possible design, the K first regions include an Mⱼ^{th} first region and (K-1) first regions.

A first function value corresponding to the Mⱼ^{th} first region is a smallest value or a largest value among the M first function values, or a first function value corresponding to the Mⱼ^{th} first region is a smallest value in the absolute values of the M first function values, and Mⱼ is a positive integer less than or equal to M.

A difference between a first function value corresponding to each of the (K-1) first regions and the first function value corresponding to the Mⱼ^{th} first region is less than a first threshold. Alternatively, each of the (K-1) first regions is adjacent to the Mⱼ^{th} first region.

In a possible design, a value of K is determined by the terminal device. Compared with a manner in which a network device configures the value of K, a manner in which the terminal device autonomously determines the value of K can reduce signaling overheads.

In a possible design, the method further includes: receiving first information, where the first information indicates the value of K, so that the network device flexibly configures the value of K.

In a possible design, the first threshold is determined by the terminal device. Compared with a manner in which the network device configures the first threshold, a manner in which the terminal device autonomously determines the first threshold can reduce signaling overheads.

In a possible design, the method further includes: receiving second information, where the second information indicates the first threshold, so that the network device flexibly configures the first threshold.

In a possible design, that the terminal device sends the first request based on the radio frequency channel data of the M first regions includes: sending the first request under a first condition.

The first condition includes at least one of the following:
First item: The M first function values are positive values, and a smallest value among the M first function values is greater than a second threshold. Alternatively, the M first function values are negative values, and a largest value among the M first function values is less than a second threshold. Alternatively, a smallest value in the absolute values of the M first function values is greater than a second threshold. An Mᵢ^{th} first function value among the M first function values represents a difference between first measurement data and radio frequency channel data of an Mᵢ^{th} first region among the M first regions, the first measurement data indicates the signal measurement result, and Mᵢ is the integer that ranges from 1 to M.
Second item: A level number corresponding to the M first regions is less than a level threshold.
Third item: Level resolution corresponding to the M first regions is lower than a resolution threshold, where the level resolution corresponding to the M first regions indicates a region size of each of the M first regions.

In other words, the terminal device determines whether to send the first request, that is, whether to request radio frequency channel data of a finer granularity region, by determining the first condition. That the first condition is met means that the terminal device needs to continue to obtain the radio frequency channel data of the finer granularity region.

In a possible design, the method further includes: The terminal device sends a first instruction under a second condition, where
the first instruction instructs to stop transmitting radio frequency channel data of a third geographic region, and the third geographic region includes a geographic region covered by each of the M first regions.

The second condition includes at least one of the following:
First item: N second function values are positive values, and a smallest value in the N second function values is less than or equal to the second threshold. Alternatively, N second function values are negative values, and a largest value in the N second function values is greater than or equal to the second threshold. Alternatively, a smallest value in absolute values of the N second function values is less than or equal to the second threshold. An Nᵢ^{th} second function value in the N second function values represents a difference between the first measurement data and radio frequency channel data of an Nᵢ^{th} second region in the N second regions, the first measurement data indicates the signal measurement result, and Nᵢ is an integer that ranges from 1 to N.
Second item: A level number corresponding to the N second regions is equal to the level threshold.
Third item: Level resolution corresponding to the N second regions is equal to the resolution threshold, where the level resolution corresponding to the N second regions indicates a region size of each of the N second regions.

In other words, the terminal device determines whether to send the first instruction, to explicitly indicate to stop transmitting the radio frequency channel data by determining the second condition. That the second condition is met means that the terminal device does not need to continue to obtain the radio frequency channel data of the finer granularity region, and may notify to stop transmitting the radio frequency channel data, to reduce a communication resource.

In a possible design, the method further includes: The terminal device sends a second request under a third condition, where
the second request is used to request radio frequency channel data of P third regions, P is a positive integer, the P third regions are determined based on the N second regions, and a level corresponding to the P third regions is lower than or equal to a level corresponding to the N second regions.

The third condition includes: A smallest value in N second function values is greater than the second threshold, or a largest value in N second function values is less than the second threshold. An Nᵢ^{th} second function value in the N second function values represents a difference between the first measurement data and radio frequency channel data of an Nᵢ^{th} second region in the N second regions, the first measurement data indicates the signal measurement result, and Nᵢ is an integer that ranges from 1 to N.

The third condition further includes: A level number corresponding to the N second regions is equal to the level threshold, or level resolution corresponding to the N second regions is equal to the resolution threshold, where the level resolution corresponding to the N second regions indicates a region size of each of the N second regions.

In other words, even if a 'region mis-identification' phenomenon occurs, the terminal device can return to a previous level or return to another level, to re-determine a region of interest of the terminal device.

'Region mis-identification' may be understood as follows: A region actually determined by the terminal device based on radio frequency channel data is inconsistent with a region that should be located. For example, the terminal device is located in a region 1, but the region determined based on the radio frequency channel data is a region 2. In this case, radio frequency channel data subsequently obtained by the terminal device is radio frequency channel data of the region 2 at a finer granularity. Consequently, the terminal device cannot find a region that the terminal device is most interested in, which greatly affects positioning or auxiliary communication.

In a possible design, that the P third regions are determined based on the N second regions includes: A geographic region constituted by the P third regions is a fourth geographic region, and the geographic region constituted by the N second regions is the second geographic region; and
the fourth geographic region does not completely overlap the second geographic region; or the fourth geographic region is different from the second geographic region, and the fourth geographic region includes at least a part of the second geographic region.

In a possible design, condition information is determined by the terminal device, to reduce signaling overheads. The condition information indicates at least one of the following: the second threshold, the level threshold, or the resolution threshold.

In a possible design, the method further includes: receiving the condition information, so that the network device flexibly configures the condition information. The condition information indicates at least one of the following: the second threshold, the level threshold, or the resolution threshold.

In a possible design, the first request includes at least one of the following:
first item: the smallest value or the largest value among the M first function values, or the smallest value in the absolute values of the M first function values; and the Mᵢ^{th} first function value among the M first function values represents the difference between the first measurement data and the radio frequency channel data of the Mᵢ^{th} first region among the M first regions, the first measurement data indicates the signal measurement result, and Mᵢ is the integer that ranges from 1 to M; or
second item: the level number corresponding to the M first regions; or
third item: the level resolution corresponding to the M first regions, where the level resolution corresponding to the M first regions indicates the region size of each of the M first regions.

In this way, if the network device performs termination condition determining, the network device may determine, based on the smallest value or the largest value among the M first function values (or the level number corresponding to the M first regions or the level resolution corresponding to the M first regions), whether to continue to deliver the radio frequency channel data of the finer granularity region. Alternatively, the network device may optimize radio frequency channel map based on the smallest value or the largest value among the M first function values. Alternatively, the network device may optimize radio frequency channel map based on the smallest value in the absolute values of the M first function values.

In a possible design, before receiving the radio frequency channel data of the M first regions, the method further includes: The terminal device sends third information, where the third information includes at least one of the following:
first item: the level number corresponding to the M first regions, where this means that the terminal device requests, by using a level number of the third information, radio frequency channel data corresponding to the level number; or
second item: the level resolution corresponding to the M first regions, where the level resolution corresponding to the M first regions indicates the region size of each of the M first regions, and this means that the terminal device requests, by using level resolution of the third information, radio frequency channel data corresponding to the level resolution; or
third item: region information of the third geographic region, where the third geographic region includes the geographic region covered by each of the M first regions, and this means that the terminal device requests radio frequency channel data corresponding to the third geographic region.

According to a second aspect, a communication method is provided. The method may be performed by a network device. The network device may be the network device, or may be a processor, a module, a chip, a chip system, or the like that is in the network device and that implements the method. The method includes: The network device sends radio frequency channel data of M first regions, where M is an integer greater than or equal to 2; the network device receives a first request, where the first request is used to request radio frequency channel data of N second regions, N is an integer greater than or equal to 2, the N second regions are determined based on the M first regions, a level corresponding to the N second regions is higher than a level corresponding to the M first regions, and the first request is determined based on the radio frequency channel data of the M first regions; and the network device sends the radio frequency channel data of the N second regions.

In a possible design, that the N second regions are determined based on the M first regions includes: A geographic region constituted by K first regions in the M first regions is a first geographic region, where each of the K first regions overlaps one of the N second regions, and K is a positive integer less than M; a geographic region constituted by the N second regions is a second geographic region; and
the first geographic region is the same as the second geographic region; or the first geographic region is different from the second geographic region, and the first geographic region includes the second geographic region; or the first geographic region is different from the second geographic region, and the second geographic region includes the first geographic region.

In a possible design, the method further includes: sending first information, where the first information indicates a value of K.

In a possible design, the method further includes: sending second information, where the second information indicates a first threshold, and the first threshold is used to determine the K first regions.

In a possible design, the first request includes at least one of the following:
first item: a smallest value or a largest value in M first function values, or a smallest value in absolute values of M first function values; and an Mᵢ^{th} first function value among the M first function values represents a difference between first measurement data and radio frequency channel data of an Mᵢ^{th} first region among the M first regions, the first measurement data indicates a signal measurement result, and Mᵢ is an integer that ranges from 1 to M; or
second item: level number corresponding to the M first regions; or
third item: level resolution corresponding to the M first regions, where the level resolution corresponding to the M first regions indicates a region size of each of the M first regions.

In a possible design, that the network device sends the radio frequency channel data of the N second regions includes: sending the radio frequency channel data of the N second regions under a first condition.

The first condition includes at least one of the following:
First item: The M first function values are positive values, and the smallest value among the M first function values is greater than a second threshold. Alternatively, the M first function values are negative values, and the largest value among the M first function values is less than a second threshold. Alternatively, the smallest value in the absolute values of the M first function values is greater than a second threshold. The Mᵢ^{th} first function value among the M first function values represents the difference between the first measurement data and the radio frequency channel data of the Mᵢ^{th} first region among the M first regions, the first measurement data indicates the signal measurement result, and Mᵢ is the integer that ranges from 1 to M.
Second item: The level number corresponding to the M first regions is less than a level threshold.
Third item: The level resolution corresponding to the M first regions is lower than a resolution threshold, where the level resolution corresponding to the M first regions indicates the region size of each of the M first regions.

In other words, the network device determines whether to send radio frequency channel data of a finer granularity region by determining the first condition. That the first condition is met means that the network device needs to continue to send the radio frequency channel data of the finer granularity region.

In a possible design, after sending the radio frequency channel data of the N second regions, the method further includes: The network device receives a first instruction, where the first instruction instructs to stop transmitting radio frequency channel data of a third geographic region, and the third geographic region includes a geographic region covered by each of the M first regions.

After sending the radio frequency channel data of the N second regions, the method further includes: The network device receives a second request, where the second request is used to request radio frequency channel data of P third regions, P is a positive integer, the P third regions are determined based on the N second regions, and a level corresponding to the P third regions is lower than or equal to the level corresponding to the N second regions.

That the P third regions are different from the N second regions may be understood as follows: At least a part of the P third regions are different from any part of the N second regions.

In a possible design, before sending the radio frequency channel data of the M first regions, the method further includes: The network device receives third information, where
the third information includes at least one of the following:
first item: the level number corresponding to the M first regions; or
second item: the level resolution corresponding to the M first regions, where the level resolution corresponding to the M first regions indicates the region size of each of the M first regions; or
third item: region information of the third geographic region, where the third geographic region includes the geographic region covered by each of the M first regions.

That the network device sends the radio frequency channel data of the M first regions includes: The network device sends the radio frequency channel data of the M first regions based on the third information, to send radio frequency channel data requested by a terminal device.

With reference to the first aspect and the second aspect, in a possible design, the radio frequency channel data of the Mᵢ^{th} first region among the M first regions at least indicates a status of a radio frequency channel Mᵢ, the radio frequency channel Mᵢ is a radio frequency signal between the terminal device and the network device, the terminal device is located at an Mᵢ^{th} first reference point, the Mᵢ^{th} first reference point is located in the Mᵢ^{th} first region, and Mᵢ is the integer that ranges from 1 to M.

For example, the status of the radio frequency channel Mᵢ is represented by at least one of the following parameters: power, a delay, an angle of arrival AoA, and an angle of departure AoD.

With reference to the first aspect and the second aspect, in a possible design, radio frequency channel data of an Nᵢ^{th} second region in the N second regions at least indicates a status of a radio frequency channel Nᵢ, the radio frequency channel Nᵢ is a radio frequency signal between the terminal device and the network device, the terminal device is located at an Nᵢ^{th} second reference point, the Nᵢ^{th} second reference point is located in the Nᵢ^{th} second region, and Nᵢ is an integer that ranges from 1 to N.

For example, the status of the radio frequency channel Nᵢ is represented by at least one of the following parameters: power, a delay, an AoA, and an AoD.

According to a third aspect, a communication apparatus is provided, configured to implement various methods. The communication apparatus may be the terminal device in the first aspect, or an apparatus, for example, a chip or a chip system, included in the terminal device. Alternatively, the communication apparatus may be the network device in the second aspect, or an apparatus, for example, a chip or a chip system, included in the network device.

The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to a fourth aspect, a communication apparatus is provided, including a processor and a memory. The memory is configured to store computer instructions; and when the processor executes the instructions, the communication apparatus is enabled to perform the method according to any one of the foregoing aspects. The communication apparatus may be the terminal device in the first aspect, or an apparatus, for example, a chip or a chip system, included in the terminal device. Alternatively, the communication apparatus may be the network device in the second aspect, or an apparatus, for example, a chip or a chip system, included in the network device.

According to a fifth aspect, a communication apparatus is provided, including a processor and a communication interface. The communication interface is configured to communicate with a module outside the communication apparatus. The processor is configured to execute a computer program or instructions, so that the communication apparatus performs the method according to any one of the foregoing aspects. The communication apparatus may be the terminal device in the first aspect, or an apparatus, for example, a chip or a chip system, included in the terminal device. Alternatively, the communication apparatus may be the network device in the second aspect, or an apparatus, for example, a chip or a chip system, included in the network device.

According to a sixth aspect, a communication apparatus is provided, including at least one processor. The processor is configured to execute a computer program or instructions stored in a memory, so that the communication apparatus performs the method according to any one of the foregoing aspects. The memory may be coupled to the processor, or may be independent of the processor. The communication apparatus may be the terminal device in the first aspect. Alternatively, the communication apparatus may be the network device in the second aspect.

According to a seventh aspect, a computer-readable storage medium is provided. The computer-readable storage medium stores a computer program or instructions. When the computer program or the instructions are run on a communication apparatus, the communication apparatus is enabled to perform the method according to any one of the first aspect and the possible designs of the first aspect.

According to an eighth aspect, a computer program product including instructions is provided. When the computer program product runs on a communication apparatus, the communication apparatus is enabled to perform the method according to any one of the first aspect and the possible designs of the first aspect.

According to a ninth aspect, a communication apparatus is provided (for example, the communication apparatus may be a chip or a chip system). The communication apparatus includes a processor, configured to implement the function in any one of the first aspect and the possible designs of the first aspect, or configured to implement the function in any one of the second aspect and the possible designs of the second aspect.

In some possible designs, the communication apparatus includes a memory, and the memory is configured to store necessary program instructions and data.

In some possible designs, when the apparatus is a chip system, the apparatus may include a chip, or may include a chip and another discrete component.

According to a tenth aspect, a communication system is provided. The communication system includes a terminal device and a network device. The terminal device is configured to perform the method in any one of the first aspect or the possible designs of the first aspect, and the network device is configured to perform the method in any one of the second aspect or the possible designs of the second aspect.

It may be understood that when the communication apparatus provided in any one of the third aspect to the tenth aspect is a chip, a sending action/function of the communication apparatus may be understood as outputting information, and a receiving action/function of the communication apparatus may be understood as inputting information.

For technical effect brought by any one of the designs of the second aspect to the tenth aspect, refer to the technical effect brought by different designs of the first aspect. Details are not described herein again.

### BRIEF DESCRIPTION OF DRAWINGS

FIG. 1 is a diagram of an architecture of a communication system according to an embodiment of this application;
FIG. 2a is a top view of a physical world according to an embodiment of this application;
FIG. 2b is a diagram of sensing reconstruction according to an embodiment of this application;
FIG. 2c is a diagram of grid division according to an embodiment of this application;
FIG. 2d is a radio frequency channel map according to an embodiment of this application;
FIG. 2e is a diagram of sensing quality of a radio frequency channel map according to an embodiment of this application;
FIG. 3 is a diagram of a principle of transmitting radio frequency channel data according to an embodiment of this application;
FIG. 4 is a schematic flowchart of a communication method according to an embodiment of this application;
FIG. 5a is a diagram of another principle of transmitting radio frequency channel data according to an embodiment of this application;
FIG. 5b is a diagram of still another principle of transmitting radio frequency channel data according to an embodiment of this application;
FIG. 5c is a diagram of distribution of geographic regions according to an embodiment of this application;
FIG. 5d is a diagram of other distribution of geographic regions according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic flowchart of yet another communication method according to an embodiment of this application;
FIG. 9 is a schematic flowchart of still yet another communication method according to an embodiment of this application;
FIG. 10 is a diagram of a principle of region positioning according to an embodiment of this application;
FIG. 11a is a diagram of yet another principle of transmitting radio frequency channel data according to an embodiment of this application;
FIG. 11b-1 and FIG. 11b-2 are a diagram of still yet another principle of transmitting radio frequency channel data according to an embodiment of this application;

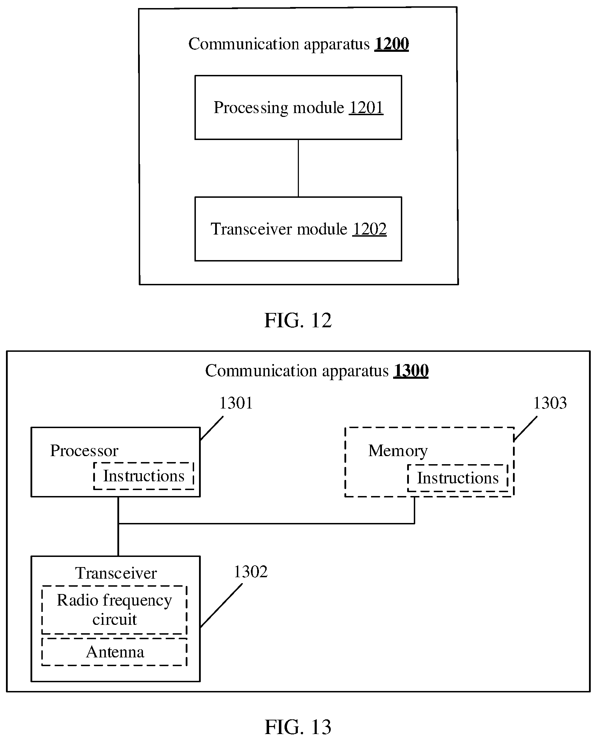

FIG. 12 is a diagram of a structure of a communication apparatus according to an embodiment of this application;
FIG. 13 is a diagram of a structure of another communication apparatus according to an embodiment of this application; and

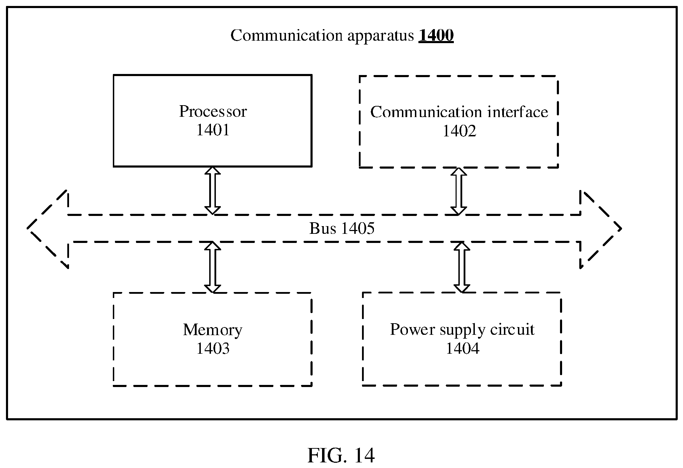

FIG. 14 is a diagram of a structure of still another communication apparatus according to an embodiment of this application.

### DESCRIPTION OF EMBODIMENTS

The following describes technical solutions of this application with reference to accompanying drawings.

In descriptions of this application, the term "and/or" in this application describes only an association relationship between associated objects and indicates that three relationships may exist. For example, A and/or B may indicate the following three cases: Only A exists, both A and B exist, and only B exists.

In the descriptions of this application, "a plurality of" means two or more unless otherwise specified. "At least one of the following items (pieces)" or a similar expression thereof means any combination of these items. For example, at least one item (piece) of a, b, or c may indicate a, b, c, a and b, a and c, b and c, or a, b, and c.

In the descriptions of this application, the terms "first", "second", and the like are used to distinguish between same items or similar items that have basically same functions and purposes. The terms such as "first" and "second" do not limit a quantity and an execution sequence, and the terms such as "first" and "second" do not indicate a definite difference.

In the descriptions of this application, the word like "example" or "for example" represents giving an example, an illustration, or a description. Any embodiment or design scheme described as an "example" or "for example" in embodiments of this application shall not be construed as being more preferred or more advantageous than another embodiment or design scheme. Exactly, use of the word like "example" or "for example" is intended to present a related concept in a specific manner for ease of understanding.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

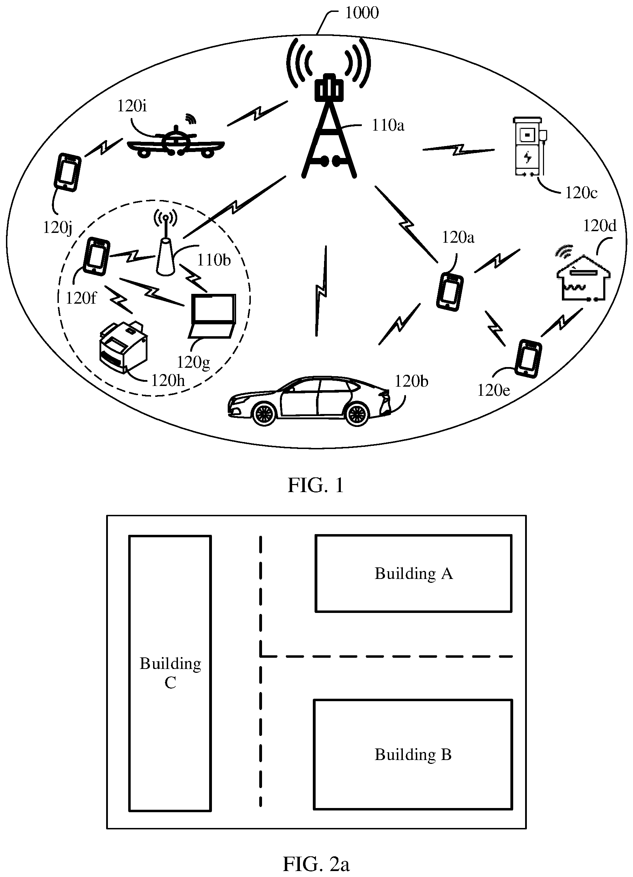

FIG. 1 is a diagram of an architecture of a communication system 1000 to which embodiments of this application are applied. As shown in FIG. 1, the communication system 1000 includes at least one network device (for example, 110a and 110b in FIG. 1) and at least one terminal device (for example, 120a to 120j in FIG. 1). The terminal device may communicate with the network device in a wireless manner. Optionally, different network devices may communicate with each other. Optionally, different terminal devices may communicate with each other.

It should be noted that FIG. 1 is merely a diagram. Although not shown, another network device may be further included in the communication system 1000. For example, the communication system 1000 may further include one or more of a core network (core network, CN) device, a wireless relay device, and a wireless backhaul device. This is not specifically limited herein.

The network device may be connected to the core network device in a wireless or wired manner. The core network device and the network device may be different independent physical devices, or functions of the core network device and logical functions of the network device may be integrated into a same physical device, or a part of functions of the core network device and a part of functions of the network device may be integrated into one physical device. This is not specifically limited in embodiments of this application.

Optionally, the network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. Alternatively, the RAN may be an open radio access network (open RAN, O-RAN, or ORAN), a cloud radio access network (cloud radio access network, CRAN), or a communication network of two or more of the foregoing networks. The RAN device may be a base station (base station), an evolved NodeB (evolved NodeB, eNodeB), a transmission reception point (transmission reception point, TRP), a next-generation NodeB (next-generation NodeB, gNB) in a 5th generation (5th generation, 5G) mobile communication system, a next-generation base station in a 6th generation (6th generation, 6G) mobile communication system, a base station in a future mobile communication system, a wireless fidelity (wireless fidelity, Wi-Fi) system, a long range (long range, LoRa) radio system, or an access node in an internet of vehicles system. Alternatively, the RAN device may be a module or a unit that implements a part of functions of the base station, for example, may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part or all of functions of a physical layer. For detailed descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may also have a different name, but a person skilled in the art may understand a meaning thereof. For example, in an ORAN system, the CU may also be referred to as an O-CU (open CU), the DU may also be referred to as an O-DU, and the RU may also be referred to as an O-RU. Any one of the CU (or a CU-CP or a CU-UP), the DU, and the RU in this application may be implemented by using a software module, a hardware module, or a combination of a software module and a hardware module. A radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the network device is used as an abbreviation of the radio access network device, and the base station is used as an example of the radio access network device.

Optionally, the terminal device accesses a core network via the network device. The terminal device includes a device that provides a voice and/or data connectivity for a user. Specifically, the terminal device includes a device that provides the voice for the user, includes a device that provides the data connectivity for the user, or includes a device that provides the voice and the data connectivity for the user, for example, may include a handheld device having a wireless connection function, or a processing device connected to a wireless modem. The terminal device may communicate with the core network via the radio access network, exchange a voice or data with the RAN, or exchange a voice and data with the RAN. The terminal device may include user equipment (user equipment, UE), a wireless terminal device, a mobile terminal device, a D2D terminal device, a V2X terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, handheld, or computer built-in mobile apparatus. For example, the terminal device may be a device like a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device like a barcode, radio frequency identification (radio frequency identification, RFID), a sensor, a global positioning system (global positioning system, GPS), or a laser scanner.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood that any device that can perform data communication with the base station may be considered as the terminal device.

In embodiments of this application, an apparatus configured to implement a function of the terminal device may be a terminal device, or may be an apparatus, for example, a chip system, that can support the terminal device in implementing a function. The apparatus may be installed in the terminal device. In embodiments of this application, the chip system may include a chip, or may include a chip and another discrete component. In the technical solutions provided in embodiments of this application, an example in which the apparatus configured to implement the function of the terminal is a terminal device is used to provide descriptions.

It should be understood that the network device and the terminal device may be at fixed locations, or may be movable. The network device and the terminal device may be deployed on land, including being deployed indoor or outdoor, handheld, or vehicle-mounted, may be deployed on water, or may be deployed on an airplane, a balloon, or a satellite in air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile base station. For the terminal device 120j that accesses the radio access network via 120i, the terminal device 120i is a network device. However, for the network device 110a, 120i is a terminal device. In other words, 110a and 120i communicate with each other via a radio air interface protocol. Certainly, 110a and 120i may alternatively communicate with each other via an interface protocol between base stations. In this case, for 110a, 120i is also a network device. Therefore, the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

Communication may be performed between the network device and the terminal device, between the network devices, and between the terminal devices by using a licensed spectrum, an unlicensed spectrum, or both the licensed spectrum and the unlicensed spectrum. Communication may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device herein may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including the function of the terminal device.

In embodiments of this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device. The cell establishing the wireless connection to the terminal device is referred to as a serving cell of the terminal device. When the terminal device communicates with the serving cell, the terminal device is further interfered by a signal from a neighboring cell.

It should be noted that the solutions in embodiments of this application may alternatively be applied to another communication system, and a corresponding name may alternatively be replaced with a name of a corresponding function in the another communication system.

For ease of understanding of embodiments of this application, the following first briefly describes terms in embodiments in this application. It should be understood that these descriptions are merely for ease of understanding embodiments of this application, and should not constitute any limitation on this application.

### 1. Radio frequency channel map and radio frequency channel data

In a communication system, environment information is obtained by using a wireless sensing technology to assist channel prediction, positioning, beamforming, and the like, thereby improving communication service quality. A process of performing prediction by using the wireless sensing technology to form a radio frequency channel mapping map is referred to as radio frequency mapping (radio frequency mapping, RF mapping). A map obtained through RF mapping is referred to as a radio frequency channel map. Data corresponding to the radio frequency channel map is referred to as radio frequency channel data.

In this application, the radio frequency channel map may indicate information in the following two aspects:
In one aspect, the radio frequency channel map corresponds to a specific geographic region, and indicates geographical locations and region sizes of a plurality of regions obtained by dividing the geographic region.

The geographic region may be a region in a specific range in a real physical world. For example, the geographic region may be represented by using a longitude, a latitude, and a height, for example, a 100 m x 100 m outdoor scenario with a reference of a start point denoted as (*x*₀, *y*₀, *z*₀).

The plurality of regions may be regions obtained by dividing the geographic region in a specific manner. For example, the 100 m x 100 m geographic region is divided in a manner of 1 m x 1 m, to obtain 100 x 100 regions, where each region is 1 m x 1 m.

It is easily understood that in this application, the region (namely, the region obtained by dividing the geographic region in a specific manner) related to the radio frequency channel map may have at least one of the following attributes: a shape, a size, an area, a geographical location, and the like.

In this application, shapes, contours, sizes, radii, and areas of different regions are the same. Different regions have different geographical locations, and different regions do not overlap.

In a possible implementation, the shape of the region may be a square or another shape, for example, a rectangle, a trapezoid, or a triangle. Alternatively, the shape of the region may be an irregular shape. This is not limited.

For example, the shape of the region may be defined in a protocol, or may be defined by a network device. Shapes of regions defined by different network devices may be the same or may be different. Shapes of a plurality of regions may alternatively be defined by a same network device. Similarly, the size, the radius, and the area of the region may also be defined in a protocol, or may be defined by the network device. Sizes, radii, and areas of regions defined by different network devices may be the same or may be different. Sizes of a plurality of regions, radii of a plurality of regions, or areas of a plurality of regions may alternatively be defined by a same network device.

In a possible implementation, the plurality of regions may be indexed (for example, numbered), to identify different regions.

In this application, the radio frequency channel map includes a plurality of grids, and the plurality of grids one-to-one correspond to the plurality of regions.

It is easily understood that, in this application, the grid related to the radio frequency channel map may have at least one of the following attributes: a shape, a size, an area, and the like. The shape of the grid may be consistent with a shape of a region corresponding to the grid. There is a specific ratio between the size of the grid and a size of the region corresponding to the grid. There is a specific ratio between the area of the grid and an area size of the region corresponding to the grid. The size of the grid may alternatively be described in another manner, for example, resolution.

In this application, a same radio frequency channel map may include two or more layers. In the two or more layers, different layers correspond to different levels.

In this application, the level of the radio frequency channel map is described as follows:
Each level has a level number (or a level sequence number). Correspondingly, a same radio frequency channel map includes two or more layers, for example, a first layer, a second layer, and a third layer. Each layer has a level number. For example, the first layer belongs to a first level, and a level number of the first level is 1; the second layer belongs to a second level, and a level number of the second level is 2; a third layer belongs to a third level, and a level number of the third level is 3; and the rest may be deduced by analogy. Details are not described again.

Each level corresponds to resolution of a specific value, namely, level resolution. In other words, each layer has level resolution of a specific value. The level resolution indicates a region size of a region corresponding to the level. For example, a region size indicated by level resolution of the first level is 1 m x 1 m, a region size indicated by level resolution of the second level is 1 dm x 1 dm, and a region size indicated by level resolution of the third level is 1 cm x 1 cm.

It should be noted that, in this application, in a possible implementation, when a level number is associated with hierarchy of a level, it may be understood that a larger level number indicates a higher level. For example, a level indicated by a level number being 1 is lower than a level indicated by a level number being 2. Alternatively, conversely, it may be understood that a larger level number means a lower level. For example, a level indicated by a level number being 1 is higher than a level indicated by a level number being 2. In this application, an example in which a larger level number indicates a higher level is used for description, and this should not be understood as a limitation on this application.

In this application, in another possible implementation, when level resolution is associated with hierarchy of a level, it may be understood that higher level resolution means a higher level. For example, a level whose level resolution is meter (m) is lower than a level whose level resolution is decimeter (dm). Alternatively, conversely, it may be understood that higher level resolution means a lower level. For example, a level whose level resolution is meter (m) is higher than a level whose level resolution is decimeter (dm). In this application, an example in which higher level resolution indicates a higher level is used for description, and this should not be understood as any limitation on this application.

It should be supplemented that in this application, higher level resolution means a smaller granularity of a region, for example, a smaller area of the region.

It should be supplemented that, in this application, a part of attributes of regions at different levels may be same or may be different. The shape of the region is used as an example. A region corresponding to the first level is a square, for example, a region of 1 m x 1 m. A region corresponding to the second level may be a square, for example, a region of 0.1 m x 0.1 m. Alternatively, a region corresponding to the second level is a rectangle, for example, a region of 0.1 m x 0.05 m.

For example, the 100 m x 100 m geographic region is used as an example to describe the radio frequency channel map.

The geographic region (namely, the 100 m x 100 m geographic region) is divided in a 1 m x 1 m manner and a region division manner corresponding to the first level, to obtain the 100 x 100 regions, where each region is 1 m x 1 m. In this case, a level corresponding to each region in the radio frequency channel map is the first layer, a level number corresponding to each region in the radio frequency channel map is 1, and level resolution corresponding to each region in the radio frequency channel map is meter (m).

The geographic region (namely, the 100 m x 100 m geographic region) is divided in a 1 dm x 1 dm manner and a region division manner corresponding to the second level, to obtain 1000 x 1000 regions, where each region is 1 dm x 1 dm. In this case, a level corresponding to each region in the radio frequency channel map is the second layer, a level number corresponding to each region in the radio frequency channel map is 2, and level resolution corresponding to each region in the radio frequency channel map is decimeter (dm).

The geographic region (namely, the 100 m x 100 m geographic region) is divided in a 1 cm x 1 cm manner and a region division manner corresponding to the third level, to obtain 10000 x 10000 regions, where each region is 1 cm x 1 cm. In this case, a level corresponding to each region in the radio frequency channel map is the third level, a level number corresponding to each region in the radio frequency channel map is 3, and level resolution corresponding to each region in the radio frequency channel map is centimeter (cm).

It should be noted that, in this application, the following descriptions have a same meaning and may be replaced with each other: resolution, grid resolution, or level resolution.

In another aspect, the radio frequency channel map indicates radio frequency channel data of each of the plurality of regions.

In this application, radio frequency channel data of one region may be understood as radio frequency channel data between the terminal device and the network device at a reference point in the region.

The radio frequency channel data indicates at least a radio frequency channel status. The radio frequency channel data may include a related parameter of a radio frequency channel, for example, power, a delay, an angle of arrival (angle of arrival, AoA), and an angle of departure (angle of departure, AoD).

For example, there may be one or more paths between the terminal device and the network device. Correspondingly, radio frequency channel data of one region may include multipath information, for example, power, a delay, an AoA, and an AoD on each path in multiple paths.

Optionally, the radio frequency channel data of the one region may further include one or more of the following: scatterer information on each path in the multiple paths, and network device information corresponding to each path in the multiple paths.

In a possible implementation, a format of the radio frequency channel data is shown in Table 1.

**Table 1**

| Level configuration | Region positioning | Channel status | Scatterer | Network device | Sensing quality |
|---|---|---|---|---|---|
| {Start point, level resolution} | Coordinates (*xᵢ, yᵢ, zᵢ*) of a region corresponding to an *i*^{th} grid | Multipath information $\left\{\begin{matrix}\left({Power}_{1}, {Delay}_{1}, {AoA}_{1}, {AoD}_{1}\right) , \\ \left({Power}_{2}, {Delay}_{2}, {AoA}_{2}, {AoD}_{2}\right) , \\ ⋯ , \\ \left({Power}_{K}, {Delay}_{K}, {AoA}_{K}, {AoD}_{K}\right)\end{matrix}\right\}$ included in an *i*^{th} region | Identifiers of scatterers {*P*₁, *P*₂*, ···, P_{K}*} | Identifiers of network devices $\left\{B {S}_{1} , B {S}_{2} , ⋯ , B {S}_{{}_{1}^{K}}\right\}$ | *Sᵢ* |

In Table 1, the start point in the level configuration indicates a start point of the geographic region corresponding to the radio frequency channel map, for example, (*x*₀, *y*₀*, z*₀)*.*

The level resolution indicates a size of each of the plurality of regions when the plurality of regions are obtained by dividing the geographic region in the specific manner.

It is easily understood that the level resolution and the start point may be understood as a grid configuration.

The coordinates (*xᵢ, yᵢ, zᵢ*) indicate a geographical location of the *i*^{th} region in the plurality of regions when the plurality of regions are obtained by dividing the geographic region in the specific manner.

The multipath information (*Power*₁*, Delay*₁*, AoA*₁*, AoD*₁) may be understood as power (power), a delay (delay), an AoA, an AoD, and the like on a 1^{st} path between the terminal device and the network device. The subscript 1 represents a sequence number of each path in the multiple paths. The multipath information may be replaced with a channel state value, a channel status, an eigenvalue, or the like. A channel may be understood as a radio frequency channel.

The identifiers of the scatterers {*P*₁, *P*₂, ··· ,*P_{K}*} may be understood as an identifier of a scatterer on the 1^{st} path between the terminal device and the network device, an identifier of a scatterer on a 2^{nd} path between the terminal device and the network device, ..., and an identifier of a scatterer on a *K*^{th} path between the terminal device and the network device. The scatterer may also be described as a scatterer group, namely, an associated scatterer/scatterer group used when the radio frequency channel status is estimated based on the grid.

The identifiers of the network devices {*BS*₁*, BS*₂*,* ··· , *BS_{K}*} may be understood as an identifier of a network device corresponding to the 1^{st} path of the terminal device, an identifier of a network device corresponding to the 2^{nd} path of the terminal device, ..., and an identifier of a network device corresponding to the *K*^{th} path of the terminal device.

The sensing quality *Sᵢ* represents a difference between measurement data of the terminal device and radio frequency channel data of the *i*^{th} region. The sensing quality may also be described as sensing quality of service, namely, sensing quality determined based on the scatterer/scatterer group associated with the grid.

For example, the sensing quality *Sᵢ* satisfies the following formula: ${S}_{i} = {\sum }_{k = 1}^{K} \left(\left|{\hat{Delay}}_{k}-{Delay}_{k}\right|+\left|{\hat{AOX}}_{k}-{AOX}_{k}\right|\right) \times {Power}_{k}$

Herein, *Sᵢ* represents the sensing quality corresponding to the *i*^{th} region, ${\hat{Delay}}_{k}$ represents a delay of the *k*^{th} path obtained by the terminal device through measurement, *Delayₖ* represents a delay of the *k*^{th} path in the radio frequency channel data, ${\hat{AOK}}_{k}$ represents angle information (for example, an AoA or an AoD) of the *k*^{th} path obtained by the terminal device through measurement, *AOXₖ* represents angle information (for example, an AoA or an AoD) of the *k*^{th} path in the radio frequency channel data, and *Powerₖ* represents power of the *k*^{th} path in the radio frequency channel data.

It is easily understood that the foregoing formula (1) may also be replaced with the following formula: ${S}_{i} = {\sum }_{k = 1}^{K} \left(\left|{\hat{Delay}}_{k}-{Delay}_{k}\right|+\left|{\hat{AOA}}_{k}-{AOA}_{k}\right|+\left|{\hat{AOD}}_{k}-{AOD}_{k}\right|\right) \times {Power}_{k}$

Herein, *Sᵢ* represents the sensing quality corresponding to the *i*^{th} region, ${\hat{Delay}}_{k}$ represents the delay of the *k*^{th} path obtained by the terminal device through measurement, *Delayₖ* represents the delay of the *k*^{th} path in the radio frequency channel data, ${\hat{AOA}}_{k}$ represents the angle of arrival of the *k*^{th} path obtained by the terminal device through measurement, *AOAₖ* represents the angle of arrival of the *k*^{th} path in the radio frequency channel data, ${\hat{AOD}}_{k}$ represents the angle of departure of the *k*^{th} path obtained by the terminal device through measurement, *AODₖ* represents the angle of departure of the *k*^{th} path in the radio frequency channel data, and *Powerₖ* represents the power of the *k*^{th} path in the radio frequency channel data.

It is easily understood that the foregoing formula (1) may also be replaced with the following formula: ${S}_{i} = - {\sum }_{k = 1}^{K} \left(\left|{\hat{Delay}}_{k}-{Delay}_{k}\right|+\left|{\hat{AOX}}_{k}-{AOX}_{k}\right|\right) \times {Power}_{k}$

Herein, *Sᵢ* represents the sensing quality corresponding to the *i*^{th} region, ${\hat{Delay}}_{k}$ represents the delay of the *k*^{th} path obtained by the terminal device through measurement, *Delayₖ* represents the delay of the *k*^{th} path in the radio frequency channel data, ${\hat{AOX}}_{k}$ represents the angle information (for example, the AoA or the AoD) of the *k*^{th} path obtained by the terminal device through measurement, *AOXₖ* represents the angle information (for example, the AoA or the AoD) of the *k*^{th} path in the radio frequency channel data, and *Powerₖ* represents the power of the *k*^{th} path in the radio frequency channel data.

Alternatively, the foregoing formula (1) may also be replaced with the following formula: ${S}_{i} = {\sum }_{k = 1}^{K} \left(\left({\hat{Delay}}_{k}-{Delay}_{k}\right)+\left({\hat{AOX}}_{k}-{AOX}_{k}\right)\right) \times {Power}_{k}$

Herein, *Sᵢ* represents the sensing quality corresponding to the *i*^{th} region, ${\hat{Delay}}_{k}$ represents the delay of the *k*^{th} path obtained by the terminal device through measurement, *Delayₖ* represents the delay of the *k*^{th} path in the radio frequency channel data, ${\hat{AOX}}_{k}$ represents the angle information (for example, the AoA or the AoD) of the *k*^{th} path obtained by the terminal device through measurement, *AOXₖ* represents the angle information (for example, the AoA or the AoD) of the *k*^{th} path in the radio frequency channel data, and *Powerₖ* represents the power of the *k*^{th} path in the radio frequency channel data.

It is easily understood that the sensing quality *Sᵢ* may alternatively satisfy another formula form. This is not limited in this application.

It is easily understood that the radio frequency channel map may also have another name, for example, a radio frequency map or the radio frequency channel mapping map. In this application, the radio frequency channel map is used as an example for description. This should not be understood as a limitation on this application.

Similarly, the radio frequency channel data may also have another name, for example, radio frequency data or radio frequency channel mapping data. In this application, the radio frequency channel data is used as an example for description. This should not be understood as a limitation on this application.

### 2. Process of generating the radio frequency channel map

In a possible implementation, the process of generating the radio frequency channel map includes the following operations.

Step 1a: Obtain a physical world map.

For example, the physical world map is a map of the real world, for example, a map of a geographic region in the real world, as shown in a top view in FIG. 2a.

Step 1b: Obtain reconstruction information of a physical world.

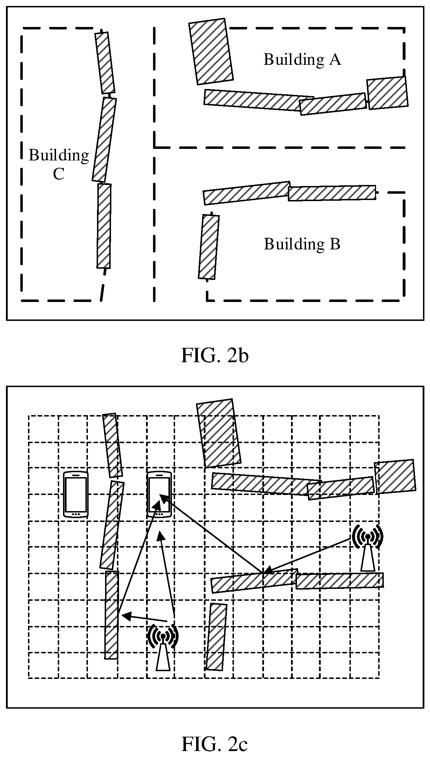

For example, first, a sensing node and a communication node are placed in the real physical world. The sensing node may be a network device, for example, a base station, and the communication node may be a terminal device or the like. Then, a reconstructed map is obtained by transmitting a physical electromagnetic wave by the sensing node (for example, the base station) or in another manner, for example, via a lidar. For example, information about an obstruction in the physical world is obtained, for example, a location and a size of the obstruction. The obstruction may be a building or the like, as shown in FIG. 2b.

It is easily understood that one of step 1a and step 1b is performed, or both step 1a and step 1b are performed. For example, a sensing operation is performed in the geographic region corresponding to step 1a, to obtain description information of the physical world.

It is easily understood that in step 1b, a signal sent by the sensing node may be referred to as a sensing quality measurement signal, and a configuration of the signal may be referred to as a configuration of the sensing quality measurement signal. For example, the configuration may include at least one of the following: antenna port (port) information, precoding (precoding) information, and subcarrier information. The foregoing configuration is delivered via a system message.

Step 2: Perform grid division on the physical world map or the reconstruction information.

For example, grid division is performed on the physical world map or the reconstruction information based on specific resolution, so that the geographic region is divided into a plurality of regions.

For example, a shape of a grid is a square, and each grid indicates a 1 m x 1 m region in the physical world. Correspondingly, if the reconstruction information corresponds to a 100 m x 100 m geographic region in the physical world, the 100 m x 100 m geographic region is divided based on a 1 m x 1 m region, to obtain 100 x 100 regions, as shown in FIG. 2c.

Step 3: Generate the radio frequency channel map based on grid information.

For example, each grid corresponds to one region. In the region, a reference point is selected, and a transmission path from the reference point to the base station through a reconstructed environment is tracked. A prediction result of a radio frequency channel is calculated based on a transmission path corresponding to each grid, to form the grid and radio frequency channel data associated with the grid.

For example, the grid information includes the shape of the grid, resolution of the grid, location information of the grid, and reference point information.

The shape of the grid indicates a shape of a region in the physical world. The resolution of the grid indicates a size of the region in the physical world. The location information of the grid indicates a geographical location of the region in the physical world. The reference point information indicates a geographical location of the reference point.

For example, a quantity of grids is 100 x 100, and the 100 x 100 grids correspond to 100 regions in the physical world. Grid information of an i^{th} grid indicates a shape of an i^{th} region, a size of the i^{th} region, a geographical location of the i^{th} region, a geographical location of an i^{th} reference point, and the like. The i^{th} reference point is a reference point of the i^{th} region, where i is a positive integer that ranges from 1 to 10000.

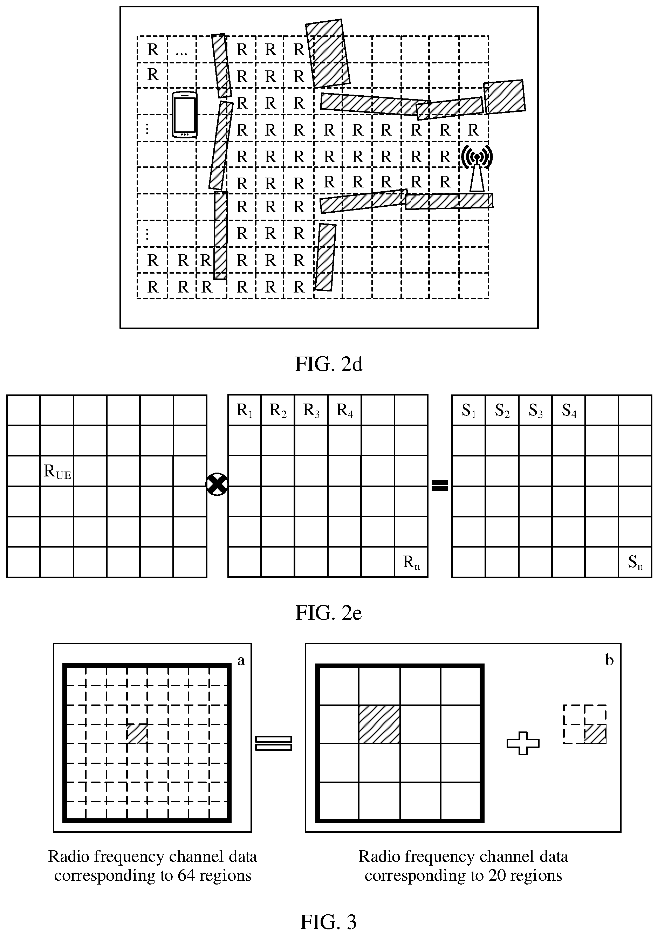

In a possible implementation, for example, a location of the terminal device is the i^{th} reference point. The network device obtains multipath information between the network device and the terminal device, for example, power, a delay, an AoA, and an AoD on each path, to generate a radio frequency channel map of the resolution, as shown in FIG. 2d.

It is easily understood that different levels correspond to different resolution. For resolution with different values, step 2 and step 3 may be repeatedly performed, to obtain a radio frequency channel map including at least two levels.

Optionally, reliability of the radio frequency channel data is evaluated by using information fed back by the terminal device. In a grid in which radio frequency channel data is reliable, the network device or the terminal device is allowed to use the radio frequency channel data to assist a communication service or a positioning service. For reliability of the radio frequency channel data, refer to the descriptions of the sensing quality. Details are not described again.

The following describes a process of determining the sensing quality with reference to FIG. 2e.

Step 1: The radio frequency channel data is defined as consisting of elements ***Rᵢ***, where the element ***Rᵢ*** shows a multipath component obtained through environment prediction at a hypothetical location grid (***xᵢ**, **y**_{**i**,} **zᵢ***)*.* For example, the radio frequency mapping element ***Rᵢ*** is a vector, denoted as: ${R}_{i} = \left\{\left(Powe{r}_{1},Dela{y}_{1},AO{X}_{1}\right),\left(Powe{r}_{2},Dela{y}_{2},AO{X}_{2}\right),…,\left(Powe{r}_{k},Dela{y}_{k},AO{X}_{k}\right)\right\}$

Step 2: The location of the terminal device is denoted as (***xᵤₑ**,**yᵤₑ**,**zᵤₑ***)*,* and measured multiple paths may be obtained via a positioning reference signal. It is assumed that the multipath component may be represented as ${R}_{ue} =$ $\left\{\left({\hat{Power}}_{1}, {\hat{Delay}}_{1}, {\hat{AOX}}_{1}\right),\left({\hat{Power}}_{2}, {\hat{Delay}}_{2}, {\hat{AOX}}_{2}\right),…,\left({\hat{Power}}_{k}, {\hat{Delay}}_{k}, {\hat{AOX}}_{k}\right)\right\}$.

Step 3: The terminal device may perform calculation based on the formula (1), to obtain the sensing quality.

It is easily understood that a larger absolute value of the sensing quality ***Sᵢ*** represents poorer sensing quality. When the sensing quality ***Sᵢ*** is greater than a threshold, it indicates that the sensing quality is below an expectation.

In addition, a corresponding scatterer ID may be associated with the sensing quality. When the sensing quality ***Sᵢ*** is updated, ***Sᵢ*** in specific grids that need to be updated may be determined based on the scatterer ID.

### 3. Application scenario of the radio frequency channel map/radio frequency channel data

In the communication system, the radio frequency channel map or the radio frequency channel data can well assist communication. For example, channel prediction, positioning, and beamforming are performed based on the radio frequency channel map or the radio frequency channel data.

However, in a process of assisting communication based on the radio frequency channel map or the radio frequency channel data, because a data amount of the radio frequency channel data is large, there is a problem of heavy communication pressure.

The following uses a positioning scenario as an example for description, and this should not be understood as a limitation on this application.

The positioning scenario is used as an example. For an outdoor 100 m x 100 m geographic region, the following operations are provided in a related technology:

First, the network device sends the radio frequency channel data to the terminal device. Correspondingly, the terminal device receives the radio frequency channel data from the network device. Then, the terminal device performs positioning based on the received radio frequency channel data. In other words, the radio frequency channel data is transmitted at a time.

It is assumed that radio frequency channel data included in each grid is fixed, for example, 300 pieces of data.

If decimeter (dm)-level positioning is implemented, 0.1 m x 0.1 m grids are obtained through division, that is, level resolution is decimeter (dm). In this case, in the 'one transmission' solution, an amount of the radio frequency channel data sent by the network device is 300*(100/0.1) *(100/0.1)*1 = 3e8 pieces of data.

If centimeter (cm)-level positioning is implemented, 0.01 m x 0.01 m grids are obtained through division, that is, level resolution is centimeter (cm). In this case, in the 'one transmission' solution, an amount of the radio frequency channel data sent by the network device is 300*(100/0.01)*(100/0.01)*1 = 3e10 pieces of data.

It can be learned that in the 'one transmission' solution, an amount of transmitted radio frequency channel data is large, and especially in a more accurate positioning scenario, an amount of transmitted radio frequency channel data is extremely large, resulting in heavy communication pressure.

Therefore, in a radio frequency channel data-assisted communication scenario, how to reduce communication pressure caused by radio frequency channel data is an urgent technical problem to be resolved.

In view of this, this application provides a communication method. The method may be applied to the system shown in FIG. 1. The method includes: A terminal device receives radio frequency channel data of M first regions, where M is an integer greater than or equal to 2; the terminal device sends a first request based on the radio frequency channel data of the M first regions, where the first request is used to request radio frequency channel data of N second regions, N is an integer greater than or equal to 2, the N second regions are determined based on the M first regions, and a level corresponding to the N second regions is higher than a level corresponding to the M first regions; and the terminal device receives the radio frequency channel data of the N second regions.

In this application, at least two transmissions are performed. For example, first, the terminal device receives the radio frequency channel data of the M first regions, and then determines, based on the radio frequency channel data of the M first regions, to send the first request, to request the radio frequency channel data of the N second regions. Then, the terminal device receives the radio frequency channel data of the N second regions. In other words, the terminal device receives radio frequency channel data at least twice.

The N second regions are determined based on the M first regions. For example, a geographic region covered by the N second regions is a geographic region covered by K first regions in the M first regions. K is a positive integer less than M. The K first regions may be understood as regions of interest of the terminal device in the M first regions. In addition, that the level corresponding to the N second regions is higher than the level corresponding to the M first regions may be understood as follows: Compared with a granularity of the M first regions, a granularity of the N second regions is smaller, or the N second regions are regions at a finer granularity and with smaller sizes.

In other words, the terminal device requests, via the first request, radio frequency channel data of regions of interest (for example, the K first regions) of the terminal device at a finer granularity, and then receives the corresponding radio frequency channel data at the finer granularity, instead of receiving the 'radio frequency channel data of the M first regions at the finer granularity' at a time. This reduces communication pressure.

The following describes a core idea and beneficial effect of this application by using two examples (the following example 1 and example 2).

Example 1: FIG. 3 is used as an example. In a centimeter-level positioning scenario, it is assumed that a radio frequency channel data amount of each region is fixed. To be specific, a centimeter (cm)-level region, a decimeter (dm)-level region, or a meter (m)-level region corresponds to a same radio frequency channel data amount.

In a related technology, 'one transmission' is performed. To be specific, a network device sends radio frequency channel data corresponding to 64 regions to the terminal device, so that the terminal device performs positioning. A level of each of the 64 regions is centimeter (cm), as shown by a block identified by a letter a in FIG. 3.

However, in this application, there may be 'two transmissions'. To be specific, the network device first sends radio frequency channel data corresponding to 16 regions to the terminal device, and then sends radio frequency channel data corresponding to four regions, so that the terminal device performs positioning. A level of each of the 16 regions is decimeter (dm), a level of each of the four regions is centimeter (cm), and the four regions are included in one region in the 16 regions, and are obtained by dividing the one region in the 16 regions at a finer granularity, as shown by a block identified by a letter b in FIG. 3. In other words, in this application, a total amount of transmitted data is the radio frequency channel data corresponding to the 20 regions, and the data amount is low.

Example 2: A positioning scenario is used as an example. For an outdoor 100 m x 100 m geographic region, it is assumed that radio frequency channel data included in each grid is fixed, for example, 300 pieces of data.

In a related technology, one transmission is performed. To be specific, if centimeter-level positioning is implemented, the region is divided into 0.01 m x 0.01 m grids, that is, level resolution is centimeter. Correspondingly, a data amount of radio frequency channel data sent by a network device to the terminal device is 300*(100/0.01)*(100/0.01)*1 = 3e10 pieces of data.

However, in this application, two transmissions may be performed. To be specific,
first, if meter-level positioning is implemented, the region is divided into 1 m x 1 m grids, that is, level resolution is meter. In this case, a data amount of radio frequency channel data sent by the network device is 300*(100/1)*(100/1)*1 = 3e6 pieces of data.

Then, if centimeter-level positioning is performed in a meter-level region, the region is divided into 0.01 m x 0.01 m grids, that is, level resolution is centimeter. To be specific, for a 1 m x 1 m region of interest of the terminal device, grids are obtained through division based on 0.01 m x 0.01 m. In this case, the data amount of the radio frequency channel data sent by the network device is 300*(100/1)*(100/1)*1 = 3e6 pieces of data.

Therefore, in the two-transmission solution in this application, a total amount of transmitted data is 6e6 pieces of data. Compared with an amount of data of a single transmission, namely, the 3e10 pieces of data, the amount of the transmitted data in this application is reduced by 5000 times.

In this way, compared with that in the related technology, in this application, radio frequency channel data of fewer regions is transmitted. This reduces communication pressure. In addition, on a terminal device side, an amount of radio frequency channel data that exists on and is processed by the terminal device is also correspondingly reduced, to help reduce existence and operation load of the device.

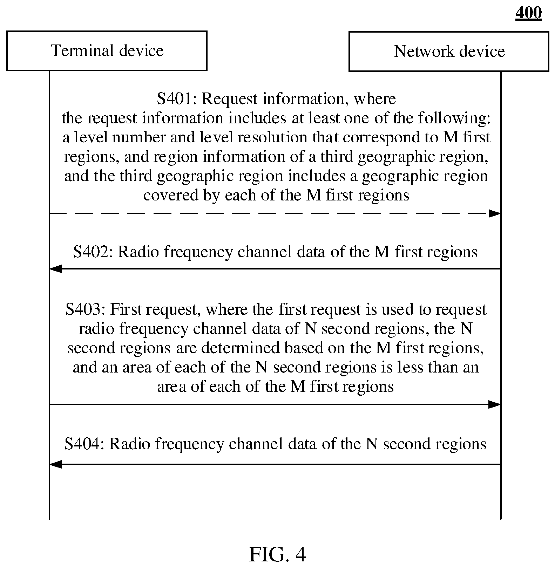

The following describes in detail the communication method provided in embodiments of this application with reference to FIG. 4. A communication method 400 provided in an embodiment of this application includes the following operations.

S401: (Optional) A terminal device sends request information to a network device. Correspondingly, the network device receives the request information from the terminal device.

The request information is used to request radio frequency channel data.

For example, the request information may include information X, and the information X indicates specific radio frequency channel data requested by the terminal device. For example, the information X includes at least one of the following:

First item: a level number corresponding to M first regions, where this means that the request information is used to request radio frequency channel data corresponding to the level number (namely, the level number corresponding to the M first regions); and the level number corresponding to the M first regions indicates a level corresponding to the M first regions.

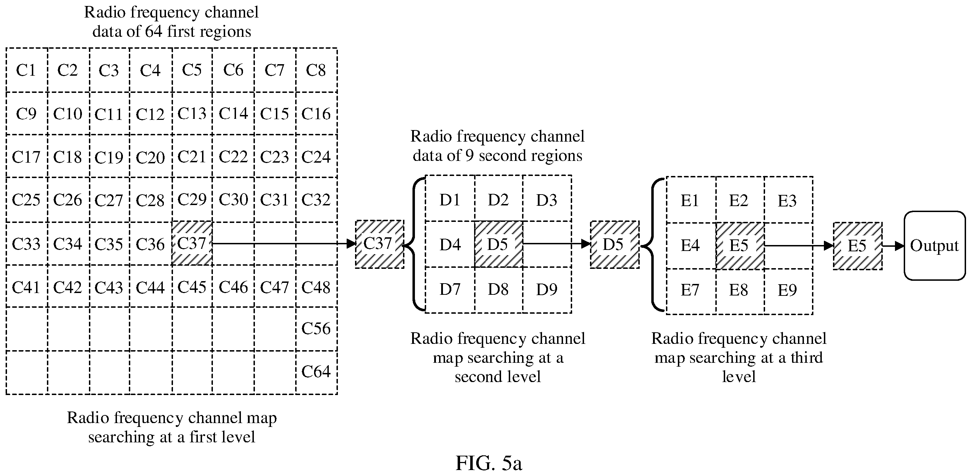

FIG. 5a is used as an example. The M first regions are regions corresponding to grids C1 to C64, and the level number corresponding to the M first regions is 1.

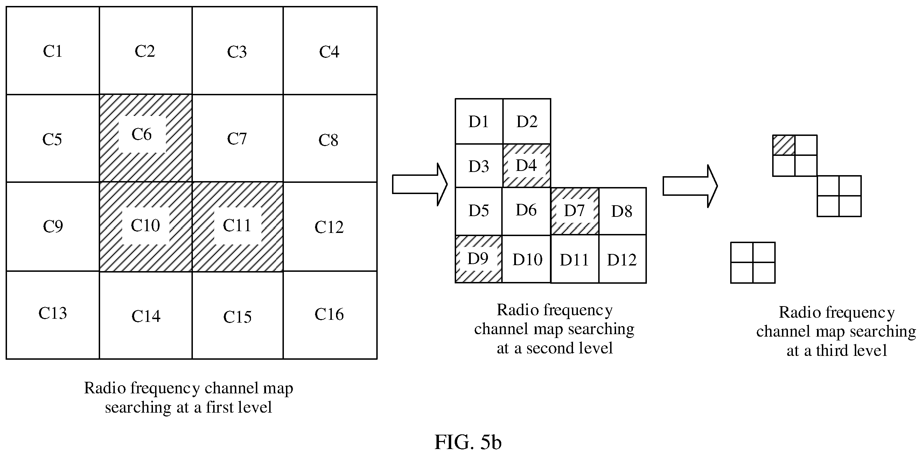

FIG. 5b is used as an example. The M first regions are regions corresponding to grids C1 to C16, and the level number corresponding to the M first regions is 1.

Correspondingly, the request information includes indication information of the level number being 1.

It should be noted that, in FIG. 5a or FIG. 5b, a grid in which C1 is located corresponds to a 1^{st} first region, a grid in which C2 is located corresponds to a 2^{nd} first region, and the rest may be deduced by analogy. Details are not described again.

Second item: level resolution corresponding to the M first regions, where this means that the request information is used to request radio frequency channel data corresponding to the level resolution (namely, the level resolution corresponding to the M first regions); and the level resolution corresponding to the M first regions indicates a region size of each of the M first regions.

FIG. 5a is used as an example. The M first regions are the regions corresponding to the grids C1 to C64, and the level resolution corresponding to the M first regions is meter.

FIG. 5b is used as an example. The M first regions are the regions corresponding to the grids C1 to C16, and the level resolution corresponding to the M first regions is meter.

Correspondingly, the request information includes indication information that the level resolution is meter.

Third item: region information of a third geographic region, where the third geographic region includes a geographic region covered by each of the M first regions, and this means that the request information is used to request radio frequency channel data corresponding to the geographic region (namely, the third geographic region).

An outdoor 100 m x 100 m geographic region is used as an example, and the M first regions are 100 regions of 1 m x 1 m. The region information of the third geographic region may include information such as a longitude and a latitude of the 100 m x 100 m geographic region.

It is easily understood that S401 is an optional step. The terminal device may perform S401.

For example, for the outdoor 100 m x 100 m geographic region, a centimeter-level positioning scenario is used as an example, and the following definitions are provided for a radio frequency channel map: A level number of a first level is 1, and level resolution is meter; a level number of a second level is 2, and level resolution is decimeter; and a level number of a third level is 3, and level resolution is centimeter. To implement centimeter-level positioning, the terminal device sends the request information to the network device. The request information carries indication information of the 'level number being 1', or carries indication information that 'the level resolution is meter', or carries region information of the 'outdoor 100 m x 100 m geographic region', to request the network device to deliver corresponding radio frequency channel data. In response to the request information of the terminal device, the network device performs S402.

Certainly, the network device may not perform S402. In this case, the network device may trigger execution of S402 in another manner. For example, a system pre-configures a transmission period of the radio frequency channel data, a level number and level resolution that correspond to the radio frequency channel data, and radio frequency channel data corresponding to a specific geographic region.

After receiving the request information, or in a specific manner, the network device triggers execution of S402. S402 is described as follows:

S402: The network device sends radio frequency channel data of the M first regions to the terminal device. Correspondingly, the terminal device receives the radio frequency channel data of the M first regions from the network device.

M is a positive integer greater than or equal to 2.

The radio frequency channel data of the M first regions may be understood as radio frequency channel data of each of the M first regions, for example, multipath information of each first region. Optionally, the radio frequency channel data of each first region further includes level resolution, coordinates of the region, scatterer information, network device information, and the like. For details, refer to the descriptions in Table 1. Details are not described again.

It is easily understood that radio frequency channel data of an Mᵢ^{th} first region among the M first regions is radio frequency channel data determined based on an Mᵢ^{th} first reference point. The radio frequency channel data of the Mᵢ^{th} first region among the M first regions at least indicates a status of a radio frequency channel Mᵢ. The radio frequency channel Mᵢ is a radio frequency signal between the terminal device and the network device, and the terminal device is located at the Mᵢ^{th} first reference point. For example, the status of the radio frequency channel Mᵢ is represented by at least one of the following parameters: power, a delay, an AoA, and an AoD. Optionally, the radio frequency channel data of the Mᵢ^{th} first region further includes the scatterer information, the network device information, and the like. For details, refer to the descriptions in Table 1. The Mᵢ^{th} first reference point is located in the Mᵢ^{th} first region, and Mᵢ is an integer that ranges from 1 to M.

After the terminal device receives the radio frequency channel data of the M first regions, the terminal device performs S403.

S403: The terminal device sends a first request to the network device based on the radio frequency channel data of the M first regions. Correspondingly, the network device receives the first request from the terminal device.

The first request is used to request radio frequency channel data of N second regions, and N is an integer greater than or equal to 2.

The N second regions are described as follows:

First, a level corresponding to the N second regions is higher than the level corresponding to the M first regions. This means that a granularity of each of the M first regions is greater than a granularity of each of the N second regions, for example, an area of each of the M first regions is greater than an area of each of the N second regions. Certainly, a shape of each of the M first regions may be the same as or different from a shape of each of the N second regions. In this application, a square region is used as an example for description, and this should not be understood as a limitation on this application.

FIG. 5a or FIG. 5b is used as an example. A unit of each of the M first regions is meter, and a unit of each of the N second regions is decimeter.

Second, the N second regions are determined based on the M first regions. Details are as follows:
First, for ease of description, the following definitions are provided:

A geographic region constituted by K first regions in the M first regions is denoted as a first geographic region, where each of the K first regions overlaps one of the N second regions, and K is a positive integer less than M.

A geographic region constituted by the N second regions is denoted as a second geographic region.

FIG. 5a is used as an example. The M first regions are the regions corresponding to the grids C1 to C64, and the K first regions are a region corresponding to the grid C37, where K is equal to 1. The N second regions are regions corresponding to grids D1 to D9, where N is equal to 9.

FIG. 5b is used as an example. The M first regions are the regions corresponding to the grids C1 to C16, and the K first regions are regions corresponding to the following grids C6, C10, and C11, where K is equal to 3. The N second regions are regions corresponding to grids D1 to D12, where N is equal to 12.

Then, a relationship between the first geographic region and the second geographic region is described as follows:
Example 1: The first geographic region is the same as the second geographic region, as shown in FIG. 5a or FIG. 5b.
Example 2: The first geographic region is different from the second geographic region, and the second geographic region includes the first geographic region.

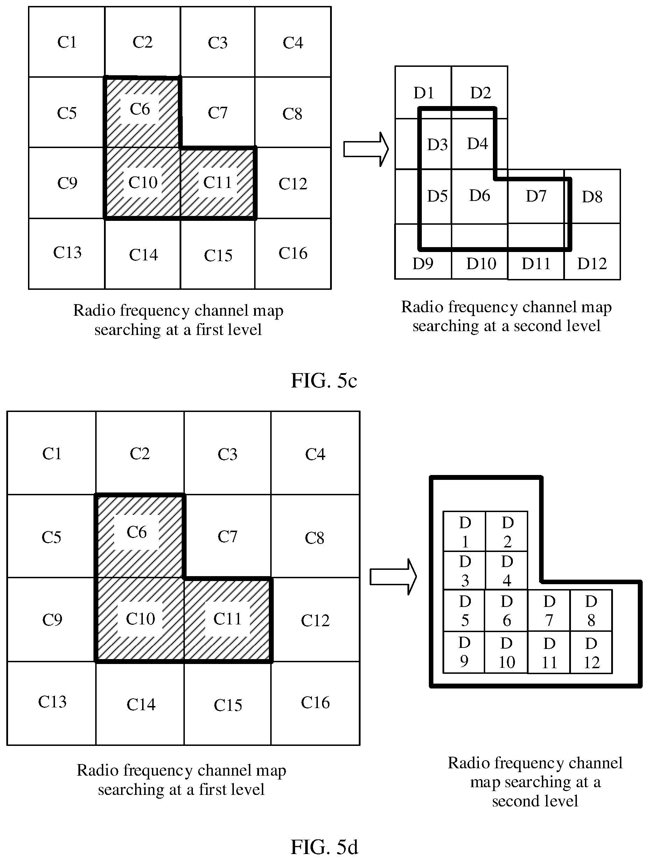

FIG. 5c is used as an example. The first geographic region is a region corresponding to grids in a thick line box. The second geographic region includes a region corresponding to each of grids D1 to D12. The relationship between the first geographic region and the second geographic region is shown in FIG. 5c.

Example 3: The first geographic region is different from the second geographic region, and the first geographic region includes the second geographic region.

FIG. 5d is used as an example. The first geographic region is a region corresponding to grids in a thick line box. The second geographic region includes a region corresponding to each of grids D1 to D12. The relationship between the first geographic region and the second geographic region is shown in FIG. 5d.

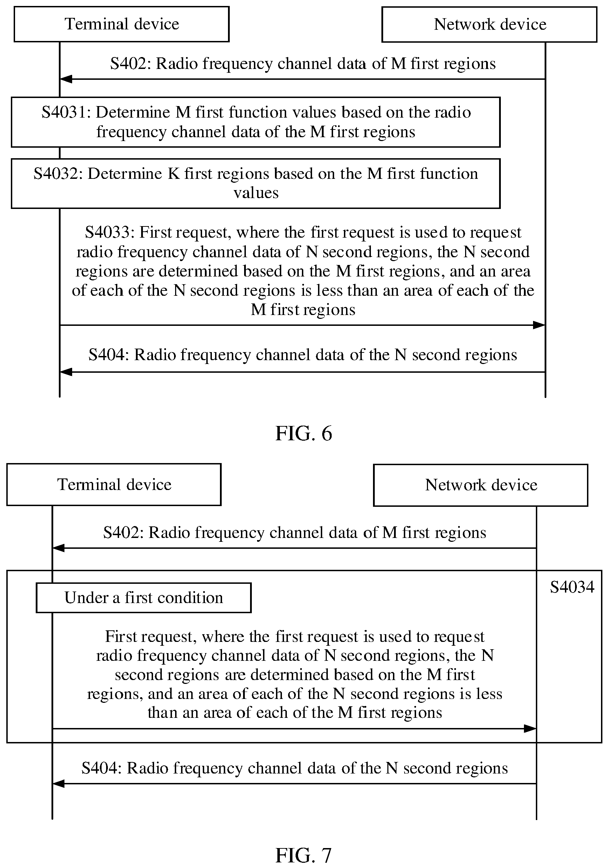

Optionally, S403 is described from a perspective of specific implementation. As shown in FIG. 6, S403 includes S4031, S4032, and S4033.

S4031: The terminal device determines M first function values based on the radio frequency channel data of the M first regions.

An Mᵢ^{th} first function value among the M first function values represents a difference between first measurement data and the radio frequency channel data of the Mᵢ^{th} first region among the M first regions. The first measurement data indicates a signal measurement result, for example, a measurement result obtained by the terminal device by measuring a signal like a reference signal or a data signal. Mᵢ is the integer that ranges from 1 to M; or

For example, an implementation process of S4031 includes the following:
First, the terminal device measures the reference signal to obtain a measurement result. The measurement result may include the multipath information. Then, for the Mᵢ^{th} first region among the M first regions, the terminal device determines the Mᵢ^{th} first function value based on the measurement result and the radio frequency channel data of the Mᵢ^{th} first region. For example, the terminal device determines the Mᵢ^{th} first function value based on any one of Formula (1) to Formula (4). Mᵢ is the integer that ranges from 1 to M. In this way, the terminal device may obtain the M first function values.

S4032: The terminal device determines the K first regions based on the M first function values.

The following provides descriptions by using four examples (the following example 1 to example 4).

Example 1: For example, the M first function values are positive values. If the M first function values are sorted in ascending order, the first K first function values among the M first function values one-to-one correspond to the K first regions. In other words, a first function value of each of the K first regions is a smaller first function value among the M first function values. When the first function value is a positive value, because a smaller Mᵢ^{th} first function value represents a smaller difference between the first measurement data and the radio frequency channel data of the Mᵢ^{th} first region, a probability that the terminal device is located in the Mᵢ^{th} first region is higher.

It should be supplemented that, if all the M first function values are positive values, the first function value may be determined based on Formula (1) or Formula (2), or may be determined based on a formula in another form. This is not limited.

Example 2: For example, the M first function values are negative values. If the M first function values are sorted in descending order, the first K first function values among the M first function values one-to-one correspond to the K first regions. In other words, a first function value of each of the K first regions is a larger first function value among the M first function values. When the first function value is a negative value, because a larger Mᵢ^{th} first function value represents a smaller difference between the first measurement data and the radio frequency channel data of the Mᵢ^{th} first region, a probability that the terminal device is located in the Mᵢ^{th} first region is higher.

It should be supplemented that, if all the M first function values are negative values, the first function value may be determined based on Formula (3), or may be determined based on a formula in another form. This is not limited.

Example 3: If absolute values of the M first function values are sorted in ascending order, the first K first function values among the M first function values one-to-one correspond to the K first regions. In other words, a first function value of each of the K first regions is a smaller absolute value in the absolute values of the M first function values. Because a smaller absolute value of the Mᵢ^{th} first function value represents a smaller difference between the first measurement data and the radio frequency channel data of the Mᵢ^{th} first region, a probability that the terminal device is located in the Mᵢ^{th} first region is higher.

It should be supplemented that, if the M first function values may include a positive value, or may include a negative value, the first function value may be determined based on Formula (4), or may be determined based on a formula in another form. This is not limited.

Example 4: The K first regions include an Mⱼ^{th} first region and (K-1) first regions.

A first function value corresponding to the Mⱼ^{th} first region is a smallest value or a largest value among the M first function values, and Mⱼ is a positive integer less than or equal to M.

It should be noted that, if the M first function values are positive values, the first function value corresponding to the Mⱼ^{th} first region is the smallest value among the M first function values. If the M first function values are negative values, the first function value corresponding to the Mⱼ^{th} first region is the largest value among the M first function values.

Alternatively, the first function value corresponding to the Mⱼ^{th} first region is a smallest value in the absolute values of the M first function values, and Mⱼ is a positive integer less than or equal to M.

In a possible example, in terms of the first function value, a difference between a first function value corresponding to each of the (K-1) first regions and the first function value corresponding to the Mⱼ^{th} first region is less than a first threshold. For example, the first threshold is denoted as ζ. The first threshold is 0.5. If the M first function values are positive values, and the first function value corresponding to the Mⱼ^{th} first region is 0.1, all first regions whose first function values are less than 0.6 belong to the (K-1) first regions. Alternatively, if the first function value corresponding to the Mⱼ^{th} first region is 0.1, all first regions whose first function values are in [-0.4,0.6] belong to the (K-1) first regions. In other words, the first function value of each of the (K-1) first regions is greater than or equal to -0.4 and less than or equal to 0.6.

Alternatively, in another possible example, in terms of a geographical location, each of the (K-1) first regions is adjacent to the Mⱼ^{th} first region.

It should be noted that a value of K may be determined by the terminal device. Alternatively, the value of K may be determined by the terminal device. In this case, this application further includes the following operation: The network device sends first information to the terminal device. Correspondingly, the terminal device receives the first information from the network device. The first information indicates the value of K, so that the terminal device selects, based on the value of K, a first region that meets a quantity requirement.

It should be noted that the first threshold may be determined by the terminal device. Alternatively, the first threshold may be determined by the terminal device. In this case, this application further includes the following operation: The network device sends second information to the terminal device. Correspondingly, the terminal device receives the second information from the network device. The second information indicates the first threshold, so that the terminal device selects, based on the first threshold, a first region that meets a configuration requirement.

It should be understood that the foregoing example 1 to example 4 are merely examples of a process of determining the K first regions. Certainly, the K first regions may alternatively be determined in another manner. This is not limited in this application.

After the terminal device determines the K first regions, the terminal device performs S4033.

S4033: The terminal device sends the first request based on the K first regions.

For example, the terminal device sends the first request to the network device based on the K first regions.

Optionally, the first request includes the level number corresponding to the M first regions and identifiers corresponding to the K first regions. This means that the first request is used to request radio frequency channel data of the K first regions at a finer granularity, for example, the radio frequency channel data of the N second regions. A level number corresponding to the N second regions is greater than the level number included in the first request.

Alternatively, the first request includes the level resolution corresponding to the M first regions and identifiers corresponding to the K first regions. This means that the first request is used to request radio frequency channel data of the K first regions at a finer granularity, for example, the radio frequency channel data of the N second regions. Level resolution corresponding to the N second regions is higher than the level resolution included in the first request.

Optionally, the first request includes one or more of the smallest value or the largest value among the M first function values, and the level number and the level resolution that correspond to the M first regions.

It should be noted that, if the M first function values are positive values, the first request includes the smallest value among the M first function values. Conversely, if the M first function values are negative values, the first request includes the largest value among the M first function values.

It should be noted that, when the first request includes the smallest value or the largest value among the M first function values, in a possible alternative form, the first request may include the smallest value in the absolute values of the M first function values.

In this way, if the network device performs termination condition determining, the network device may determine, based on the smallest value or the largest value among the M first function values (or the level number corresponding to the M first regions or the level resolution corresponding to the M first regions), whether to continue to deliver radio frequency channel data of a finer granularity region. For details, refer to the descriptions of S4041. Alternatively, the network device may optimize the radio frequency channel map based on the smallest value or the largest value among the M first function values. Alternatively, the network device may optimize the radio frequency channel map based on the smallest value in the absolute values of the M first function values.

Optionally, from a perspective of termination condition determining, S403 is described by using an example in which the terminal device performs termination condition determining. As shown in FIG. 7, S403 includes S4034.

S4034: The terminal device sends the first request to the network device under a first condition. Correspondingly, the network device receives the first request from the terminal device.

The first condition includes at least one of the following:
Condition A1: The M first function values are positive values, and the smallest value among the M first function values is greater than a second threshold. For the M first function values, refer to the descriptions of S4031. Details are not described again. For example, the second threshold is denoted as .

The second threshold may be understood as a function value threshold, and is used to represent a difference between the first measurement data and radio frequency channel data of a positioned region. The positioned region is a region actually positioned by the terminal device. For example, the terminal device performs processing based on radio frequency channel data delivered by the network device, to determine a region corresponding to a specific grid in which the terminal device is located. The region is a region actually positioned by the terminal device.

For example, the M first function values include {0.1, 0.2, 0.3, 0.4, 0.5, 0.6} and the second threshold is 0.05. The smallest value among the M first function values, is 0.1, and is still greater than the second threshold. This means that a difference between the first measurement data and radio frequency channel data of any one of the M first regions still does not reach the second threshold.

Condition A2: The M first function values are negative values, and the largest value among the M first function values is less than a second threshold. For the M first function values, refer to the descriptions of S4031. Details are not described again.

For example, the M first function values include {-0.1, -0.2, -0.3, -0.4, -0.5, -0.6}, and the second threshold is -0.05. The largest value among the M first function values is, -0.1, and is still less than the second threshold. This means that a difference between the first measurement data and radio frequency channel data of any one of the M first regions still does not reach the second threshold.

It is easily understood that, as an alternative to the condition A1 and the condition A2, the smallest value in the absolute values of the M first function values is greater than the second threshold. Certainly, another form of constraint may be set based on the M first function values and the second threshold. In conclusion, in the first condition, a specific mathematical operation is first performed on the M first function values, and then each operation result is compared with the second threshold, to determine whether the first condition is met.

Condition A3: The level number corresponding to the M first regions is less than a level threshold.

The level threshold may be understood as a level quantity search threshold in the radio frequency channel map. For example, in a centimeter-level positioning scenario, the level threshold is 3. This means that the radio frequency channel data needs to be transmitted three times, and each transmission corresponds to radio frequency channel data at a different level. For example, radio frequency channel data whose level number is 1 is first transmitted, radio frequency channel data whose level number is 2 is then transmitted, and radio frequency channel data whose level number is 3 is finally transmitted.

For the terminal device, the level number corresponding to the M first regions is 1, and is less than the level threshold being 3. This means that a quantity of times of searching for a layer in the radio frequency channel map still does not reach a layer quantity threshold.

It is easily understood that, under the condition A3, radio frequency channel data is transmitted based on consecutive level numbers. As an alternative to the condition A3, a level number quantity corresponding to radio frequency channel data that has been received by the terminal device is less than the level threshold. For example, in a centimeter-level positioning scenario, the level threshold is 2. This means that radio frequency channel data needs to be transmitted twice, and each transmission corresponds to radio frequency channel data at a different level. For example, radio frequency channel data whose level number is 1 is first transmitted, and radio frequency channel data whose level number is 3 is then transmitted.

For the terminal device, the level number corresponding to the M first regions is 1, and a level number quantity being 1 is less than the level threshold being 2. This means that a quantity of times of searching for a layer in the radio frequency channel map still does not reach a layer quantity threshold.

Condition A4: The level resolution corresponding to the M first regions is lower than a resolution threshold.

For example, in a centimeter-level positioning scenario, the level resolution is centimeter.

For the terminal device, the level resolution corresponding to the M first regions is meter, and is lower than the resolution threshold being centimeter. This means that a granularity of a region corresponding to radio frequency channel data still does not reach the resolution threshold.

It should be understood that, in S4034, the first condition includes at least one of the condition A1 to the condition A4. The first condition may be understood as a form in which a termination condition is not met. If any one of the condition A1 to the condition A4 is met, the terminal device sends the first request to the network device.

In other words, the terminal device determines whether to send the first request by determining the first condition.

In addition, the termination condition may also be understood as a convergence condition.

After receiving the first request, the network device performs S404.

S404: The network device sends the radio frequency channel data of the N second regions to the terminal device. Correspondingly, the terminal device receives the radio frequency channel data of the N second regions from the network device.

N is an integer greater than or equal to 2.

For the N second regions, refer to the descriptions of S403. Details are not described again.

The radio frequency channel data of the N second regions may be understood as radio frequency channel data of each of the N second regions, for example, multipath information of each second region. Optionally, the radio frequency channel data of each second region further includes level resolution, coordinates of the region, the scatterer information, the network device information, and the like. For details, refer to the descriptions in Table 1. Details are not described again.

It is easily understood that radio frequency channel data of an Nᵢ^{th} second region in the N second regions is radio frequency channel data determined based on an Nᵢ^{th} second reference point. The radio frequency channel data of the Nᵢ^{th} second region in the N second regions at least indicates a status of a radio frequency channel Nᵢ. The radio frequency channel Nᵢ is a radio frequency signal between the terminal device and the network device, and the terminal device is located at an Nᵢ^{th} first reference point.

For example, the status of the radio frequency channel Nᵢ is represented by at least one of the following parameters: power, a delay, an AoA, and an AoD. Optionally, the radio frequency channel data of the Nᵢ^{th} second region further includes the scatterer information, the network device information, and the like. For details, refer to the descriptions in Table 1.

The Nᵢ^{th} first reference point is located in the Nᵢ^{th} second region, and Nᵢ is an integer that ranges from 1 to N.

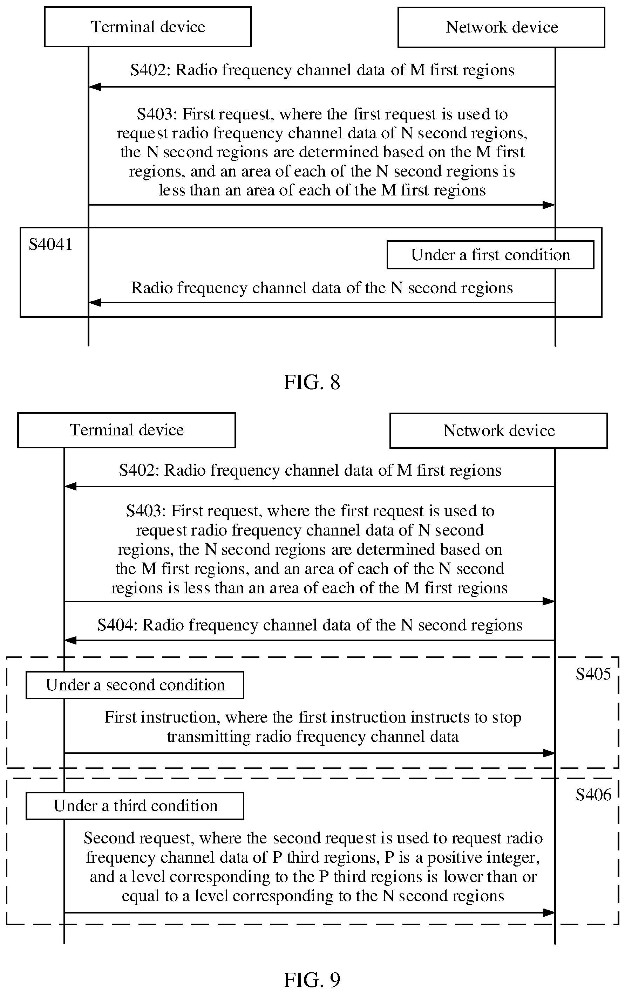

Optionally, from a perspective of termination condition determining, S404 is described by using an example in which the network device performs termination condition determining. As shown in FIG. 8, S404 includes S4041.

S4041: The network device sends the radio frequency channel data of the N second regions to the terminal device under the first condition. Correspondingly, the terminal device receives the radio frequency channel data of the N second regions from the network device.

The first condition includes at least one of the following:
Condition A1: The M first function values are positive values, and the smallest value among the M first function values is greater than the second threshold.

For the M first function values, refer to the descriptions of S4041. Details are not described again. The smallest value among the M first function values may be carried in the first request. In other words, the terminal device reports the smallest value among the M first function values to the network device via the first request.

For the second threshold, refer to the descriptions of S4034. Details are not described again.

Condition A2: The M first function values are negative values, and the largest value among the M first function values is less than the second threshold.

For the M first function values, refer to the descriptions of S4041. Details are not described again. The largest value among the M first function values may be carried in the first request. In other words, the terminal device reports the largest value among the M first function values to the network device via the first request.

For the second threshold, refer to the descriptions of S4034. Details are not described again.

Condition A3: The level number corresponding to the M first regions is less than the level threshold.

The level number among the M first function values may be carried in the first request. In other words, the terminal device reports the level number among the M first function values to the network device via the first request. Alternatively, if the network device performs S402, the network device stores the level number corresponding to the M first regions.

For the level threshold, refer to the descriptions of S4034. Details are not described again.

Condition A4: The level resolution corresponding to the M first regions is lower than the resolution threshold.

The level resolution among the M first function values may be carried in the first request. In other words, the terminal device reports the level resolution among the M first function values to the network device via the first request. Alternatively, if the network device performs S402, the network device stores the level resolution corresponding to the M first regions.

For the level resolution, refer to the descriptions of S4034. Details are not described again.

It should be understood that, in S4041, the first condition includes at least one of the condition A1 to the condition A4. For the first condition, refer to the descriptions of S4034. Details are not described again.

In other words, the network device determines whether to send the radio frequency channel data of the N second regions by determining the first condition.

It should be noted that the first condition may be determined on a terminal device side. For example, the terminal device performs S4034. Correspondingly, the network device does not need to perform S4041. Alternatively, the first condition may be determined on a network device side. For example, the network device performs S4041. Correspondingly, the terminal device does not perform S4034.

After the terminal device receives the radio frequency channel data of the N second regions, the terminal device determines N second function values based on the radio frequency channel data of the N second regions. An Nᵢ^{th} second function value in the N second function values represents a difference between the first measurement data and the radio frequency channel data of the Nᵢ^{th} second region in the N second regions, and Nᵢ is the integer that ranges from 1 to N. For a process of determining the N second function values, refer to the descriptions of S4031. Details are not described again.

Optionally, after the terminal device determines the N second function values, in a possible implementation, as shown in FIG. 9, the terminal device performs S405.

S405: The terminal device sends a first instruction to the network device under a second condition. Correspondingly, the network device receives the first instruction from the terminal device.

The first instruction instructs to stop transmitting radio frequency channel data. For example, the first instruction instructs to stop transmitting radio frequency channel data of the third geographic region, and the third geographic region includes the geographic region covered by each of the M first regions. For details, refer to the descriptions of S401. Details are not described again.

The second condition includes at least one of the following:
Condition B1: The N second function values are positive values, and a smallest value in the N second function values is less than or equal to the second threshold.

For example, the N second function values include {0.01, 0.02, 0.03, 0.04, 0.05, 0.06} and the second threshold is 0.05. The smallest value in the N second function values is 0.01, and is less than the second threshold. This means that a difference between the first measurement data and radio frequency channel data of one (or a part) of the N second regions has reached the second threshold.

Condition B2: The N second function values are negative values, and a largest value in the N second function values is greater than or equal to the second threshold.

For example, the N second function values include {-0.01, -0.02, -0.03, -0.04, -0.05, -0.06}, and the second threshold is -0.05. The largest value in the N second function values is -0.01, and is greater than the second threshold. This means that a difference between the first measurement data and radio frequency channel data of one (or a part) of the N second regions has reached the second threshold.

It is easily understood that, as an alternative to the condition B1 and the condition B2, a smallest value in absolute values of the N second function values is greater than the second threshold. Certainly, another form of constraint may be set based on the N second function values and the second threshold. In conclusion, in the second condition, a specific mathematical operation is first performed on the N second function values, and then each operation result is compared with the second threshold, to determine whether the second condition is met.

Condition B3: The level number corresponding to the N second regions is equal to the level threshold.

For example, the level number corresponding to the N second regions is 3, and is equal to the level threshold being 3. This means that a quantity of times of searching for a layer in the radio frequency channel map has been reached the layer quantity threshold.

It is easily understood that, under the condition B3, the radio frequency channel data is transmitted based on consecutive level numbers. As an alternative to the condition B3, a level number quantity corresponding to radio frequency channel data that has been received by the terminal device (or has been sent by the network device) is less than the level threshold. For example, in a centimeter-level positioning scenario, the level threshold is 2. This means that radio frequency channel data needs to be transmitted twice, and each transmission corresponds to radio frequency channel data at a different level. For example, radio frequency channel data whose level number is 1 is first transmitted, and radio frequency channel data whose level number is 3 is then transmitted.

For the terminal device, the level number corresponding to the M first regions is 1, and the level number corresponding to the N second regions is 3. In other words, the terminal device has received the radio frequency channel data twice, and the level number quantity is 2, which is equal to the level threshold being 2. This means that a quantity of times of searching for a layer in the radio frequency channel map has been reached the layer quantity threshold.

Condition B4: The level resolution corresponding to the N second regions is equal to the resolution threshold. The level resolution corresponding to the N second regions indicates a region size of each of the N second regions.

For example, the level resolution corresponding to the N second regions is centimeter, and is equal to the resolution threshold being centimeter. This means that a granularity of a region corresponding to radio frequency channel data has reached the resolution threshold.

It should be understood that, in S405, the second condition includes at least one of the condition B1 to the condition B4. The second condition may be understood as a form in which the termination condition is met.

In a first possible implementation, the second condition includes one item. For example, the second condition includes the condition B1, the condition B2, the condition B3, or the condition B4. In this case, if any one of the condition B1 to the condition B4 is met, the terminal device sends the first instruction to the network device, to stop transmitting radio frequency channel data.

In a second possible implementation, the second condition includes two items.

For example, the second condition includes the condition B1 and the condition B3, or the second condition includes the condition B2 and the condition B3. In other words, only when the level number corresponding to the N second regions is equal to the level threshold, and the smallest value in the N second function values is less than or equal to the second threshold, the terminal device sends the first instruction to the network device, to stop transmitting radio frequency channel data. This reduces a possibility of 'region mis-identification' to some extent. For 'region mis-identification', refer to the descriptions of S406. Details are not described herein again.

For another example, the second condition includes the condition B1 and the condition B4, or the second condition includes the condition B2 and the condition B4. In other words, only when the level resolution corresponding to the N second regions is equal to the resolution threshold, and the smallest value in the N second function values is less than or equal to the second threshold, the terminal device sends the first instruction to the network device, to stop transmitting radio frequency channel data. This reduces a possibility of 'region mis-identification' to some extent. For 'region mis-identification', refer to the descriptions of S406. Details are not described herein again.

In other words, the terminal device determines whether to send the first instruction by determining the second condition.

It is easily understood that, after the terminal device determines the N second function values, if the second condition is not met, the terminal device continues to send a data request, to request radio frequency channel data of a finer granularity region. This may be similar to the descriptions of S403 and S404. This is repeated until the second condition is met.

It is easily understood that S405 is an optional step. In other words, the terminal device may perform S405, to request, in an explicit indication manner, to stop transmitting the radio frequency channel data. Alternatively, the terminal device may not perform S405. In this case, if the terminal device no longer requests the radio frequency channel data from the network device, the network device no longer sends the radio frequency channel data to the terminal device. In this way, transmission of the radio frequency channel data is stopped.

Optionally, after the terminal device determines the N second function values, in another possible implementation, as shown in FIG. 9 to FIG. 11b-2, the terminal device performs S406.

S406: The terminal device sends a second request to the network device under a third condition. Correspondingly, the network device receives the second request from the terminal device.

The third condition is described as follows:
Condition C1: N second function values are positive values, and the smallest value in the N second function values is greater than the second threshold.

For example, the N second function values include {0.15, 0.25, 0.35, 0.45, 0.55, 0.65}, and the second threshold is 0.05. The smallest value in the N second function values is 0.15, and is greater than the second threshold. This means that a difference between the first measurement data and radio frequency channel data of any one of the N second regions does not reach the second threshold.

Condition C2: N second functions are negative values, and the largest value in the N second function values is less than the second threshold.

For example, the N second function values include {-0.15, -0.25, -0.35, -0.45, -0.55, -0.65}, and the second threshold is -0.05. The largest value in the N second function values is -0.15, and is less than the second threshold. This means that a difference between the first measurement data and radio frequency channel data of any one of the N second regions does not reach the second threshold.

It is easily understood that, as an alternative to the condition C1 and the condition C2, the smallest value in the absolute values of the N second function values is greater than the second threshold. Certainly, another form of constraint may be set based on the N second function values and the second threshold. In conclusion, in the third condition, a specific mathematical operation is first performed on the N second function values, and then each operation result is compared with the second threshold, to determine whether the third condition is met.

Condition C3: The level number corresponding to the N second regions is equal to the level threshold.

For the condition C3, refer to the descriptions of the condition B3. Details are not described again.

Condition C4: The level resolution corresponding to the N second regions is equal to the resolution threshold.

For the condition C4, refer to the descriptions of the condition B4. Details are not described again.

It should be noted that, in this application, the third condition includes two items.

In a possible implementation, the third condition includes the condition C1 and the condition C3, or the third condition includes the condition C2 and the condition C3. It may be understood that although the level number corresponding to the N second regions is equal to the level threshold, the smallest value in the N second function values is still greater than the second threshold (corresponding to the condition C1) or the largest value is still less than the second threshold (corresponding to the condition C2).

For example, in the centimeter-level positioning scenario, the level threshold is 3. Although the level number corresponding to the N second regions is 3, and has reached the level threshold, the smallest value in the N second function values still does not reach the second threshold. In this case, it may be understood that the terminal device always cannot meet a threshold requirement.

In another possible implementation, the third condition includes the condition C1 and the condition C4, or the third condition includes the condition C2 and the condition C4. It may be understood that although the level resolution corresponding to the N second regions is equal to the resolution threshold, the smallest value in the N second function values is still greater than the second threshold (corresponding to the condition C1) or the largest value is still less than the second threshold (corresponding to the condition C2).

For example, in the centimeter-level positioning scenario, the level resolution is centimeter. Although the level resolution corresponding to the N second regions is centimeter and has reached the resolution threshold, the smallest value in the N second function values still does not reach the second threshold. In this case, it may be understood that the terminal device always cannot meet a threshold requirement.

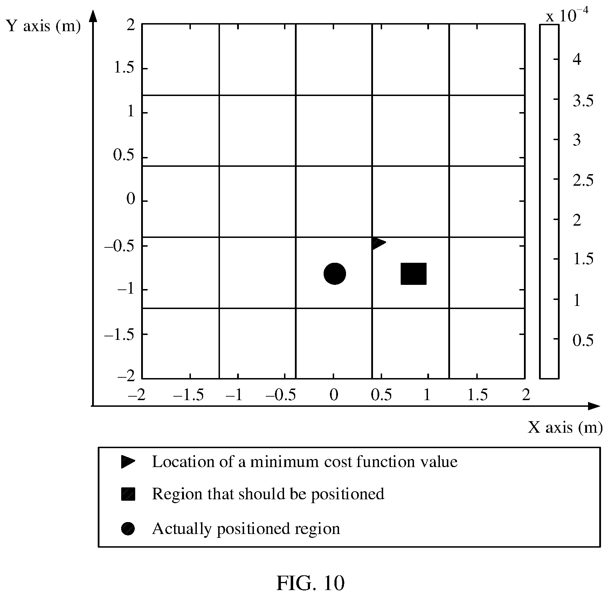

It should be supplemented that, that the terminal device always cannot meet the threshold requirement may be caused by a 'region mis-identification' phenomenon. The 'region mis-identification' phenomenon may be understood as follows: An actually positioned region is inconsistent with a region that should be positioned. FIG. 10 is used as an example. The actually positioned region is a region in which a black circle is located, and the region that should be positioned is a region in which a black box is located. In this way, based on the descriptions of S402 to S404, the radio frequency channel data of the finer granularity region is performed based on the region in which the black circle is located. As a result, the terminal device always cannot find a region in which the terminal device is located, in other words, the terminal device always cannot meet the threshold requirement. For details, refer to the descriptions of the third condition. Details are not described again. 'Region mis-identification' has a large impact on positioning or assisted communication.

The second request is described as follows:
The second request is used to request radio frequency channel data of P third regions, and P is a positive integer.

It is easily understood that a value of P may be greater than a value of K, or may be less than a value of K. This is not limited. The value of P may be determined by the terminal device, or may be determined by the network device, and then the value of P is indicated to the terminal device via configuration information (or indication information). This is not limited in this application.

A level corresponding to the P third regions is lower than or equal to the level corresponding to the N second regions.

In this application, that the P third regions are different from the N second regions may be understood as follows: At least a part of the P third regions are different from any part of the N second regions.

For example, the level corresponding to the N second regions is a third level, and the level resolution is centimeter. The level corresponding to the P third regions is also the third level, and level resolution is centimeter. However, at least one of the P third regions is different from any one of the N second regions. For example, the N second regions are regions corresponding to grids E1 to E4; and the P third regions are regions corresponding to grids E2 to E5, or the P third regions are regions corresponding to grids E5 to E8. In the radio frequency channel map, the grids E1 to E8 are grids at a same level, and different grids correspond to different regions.

For another example, the level corresponding to the N second regions is a third level, and the level resolution is centimeter. The level corresponding to the P third regions is a second level, and level resolution is decimeter. For example, the N second regions are regions corresponding to grids E1 to E4. The regions corresponding to the grids E1 to E4 are a region of a grid D4 at a finer granularity. The grids E1 to E4 are grids at a same level, and are grids at a different level from the grid D4. The P third regions are a region corresponding to a grid D3. In the radio frequency channel map, the grids D3 and D4 are grids at a same level, and different grids correspond to different regions.

For still another example, the level corresponding to the N second regions is a third level, and the level resolution is centimeter. The level corresponding to the P third regions is a first level, and level resolution is meter. For example, the N second regions are regions corresponding to grids E1 to E4. The regions corresponding to the grids E1 to E4 are a region of a grid C7 at a finer granularity. The grids E1 to E4 are grids at a same level, and are grids at a different level from the grid C7. The P third regions are a region corresponding to a grid C6. In the radio frequency channel map, the grids C6 and C7 are grids at a same level, and different grids correspond to different regions.

The P third regions are determined based on the N second regions. Details are as follows:
First, for ease of description, the following definitions are provided:
The geographic region constituted by the N second regions is denoted as the second geographic region. A geographic region constituted by the P third regions is denoted as a fourth geographic region.

Then, a relationship between the second geographic region and the fourth geographic region is described in two cases.

First case: The fourth geographic region does not completely overlap the second geographic region.

Second case: The fourth geographic region is different from the second geographic region, and the fourth geographic region includes at least a part of the second geographic region.

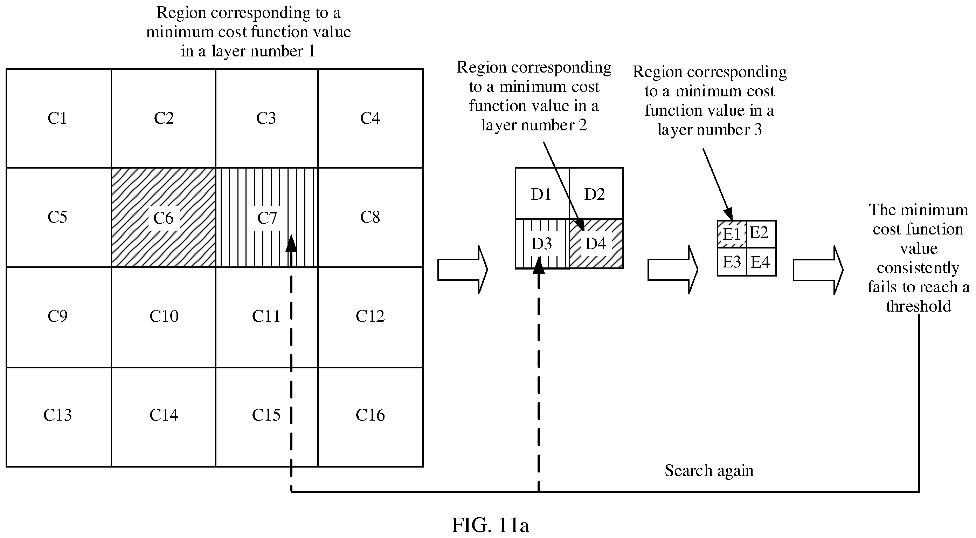

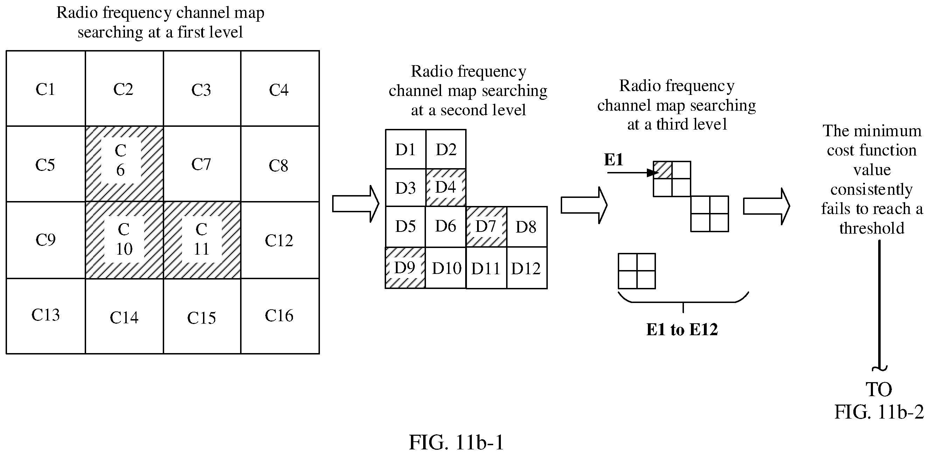

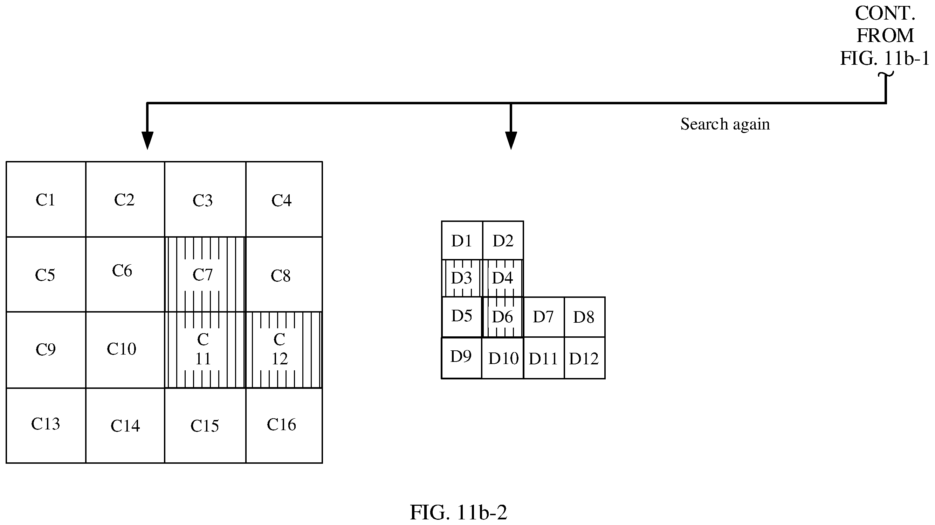

FIG. 11a is used as an example. The second geographic region (that is, the N second regions) includes a region corresponding to grids E1 to E4. A second function value of a region corresponding to the grid E1 is the smallest (or the largest).

In a possible implementation, the fourth geographic region (that is, the P third regions) may be a region corresponding to a grid D3. In this case, because the grids E1 to E4 are grids at a finer granularity that are obtained by expanding a grid D4, and are not grids at a finer granularity that are obtained by expanding the grid D3, the fourth geographic region does not overlap the second geographic region.

In another possible implementation, the fourth geographic region (that is, the P third regions) may be a region corresponding to a grid C7. In this case, because the grids E1 to E4 are grids at a finer granularity that are obtained by expanding a grid C6, and are not grids at a finer granularity that are obtained by expanding the grid C7, the fourth geographic region does not overlap the second geographic region.

FIG. 11b-1 and FIG. 11b-2 are used as an example. The second geographic region (that is, the N second regions) includes a region corresponding to grids E1 to E12. A second function value of a region corresponding to the grid E1 is the smallest (or the largest).

In a possible implementation, the fourth geographic region (that is, the P third regions) may be a region corresponding to grids D3, D4, and D6. In this case, because the grids E1 to E12 are grids at a finer granularity that are obtained by expanding grids D4, D7, and D9, the fourth geographic region overlaps a part of the second geographic region. For example, an overlapping part may be a region corresponding to the grid D4.

In another possible implementation, the fourth geographic region (that is, the P third regions) may be a region corresponding to grids C7, C11, and C12. In this case, because the grids E1 to E12 are grids at a finer granularity that are obtained by expanding grids C6, C10, and C11, the fourth geographic region overlaps a part of the second geographic region. For example, an overlapping part may be a region corresponding to the grid C11.

It should be supplemented that a process of determining the P third regions may include: The terminal device determines the P third regions based on the M first function values.

The level corresponding to the P third regions may be the same as the level corresponding to the M first regions. This means that a granularity of the third region is the same as a granularity of the first region. The following describes the process of determining the P third regions by using the first region as an example.

Example 1: The M first function values are positive values. If the M first function values are sorted in ascending order, there are P first function values that are among the M first function values and that one-to-one correspond to P first regions. The P first function values may be P consecutive values in the foregoing sorting. A smallest value in the P first function values may be a second smallest value (or described as a second value in the foregoing sorting) in the M first function values, or a third smallest value (or described as a third value in the foregoing sorting) slightly greater than a second smallest value. This is not limited.

In other words, a first function value of each of the P first regions is relatively small among the M first function values. When the first function value is a positive value, because a smaller Mᵢ^{th} first function value represents a smaller difference between the first measurement data and the radio frequency channel data of the Mᵢ^{th} first region, the probability that the terminal device is located in the Mᵢ^{th} first region is higher.

Example 2: The M first function values are negative values. If the M first function values are sorted in descending order, P first function values among the M first function values one-to-one correspond to P first regions. The P first function values may be P consecutive values in the foregoing sorting. A smallest value in the P first function values may be a second largest value (or described as a second value in the foregoing sorting) in the M second function values, or a third largest value (or described as a third value in the foregoing sorting) slightly greater than a second largest value. This is not limited.

In other words, a first function value of each of the P first regions is relatively large among the M first function values. When the first function value is a negative value, because a larger Mᵢ^{th} first function value represents a smaller difference between the first measurement data and the radio frequency channel data of the Mᵢ^{th} first region, the probability that the terminal device is located in the Mᵢ^{th} first region is higher.

Example 3: If the absolute values of the M first function values are sorted in ascending order, P first function values among the M first function values one-to-one correspond to P first regions. The P first function values may be P consecutive values in the foregoing sorting. A smallest absolute value of the P first function values may be a second smallest value (or described as a second value in the foregoing sorting) in the absolute values of the M second function values, or a third smallest value (or described as a third value in the foregoing sorting) slightly greater than a second smallest value. This is not limited.

In other words, an absolute value of a first function value of each of the P first regions is relatively small in the absolute values of the M first function values. Because a smaller absolute value of the Mᵢ^{th} first function value represents a smaller difference between the first measurement data and the radio frequency channel data of the Mᵢ^{th} first region, the probability that the terminal device is located in the Mᵢ^{th} first region is higher.

Example 4: The P first regions include an Mₐ^{th} first region and (A-1) first regions.

A first function value corresponding to the Mₐ^{th} first region is a second smallest value or a second largest value among the M first function values, and Mₐ is a positive integer less than or equal to M.

It should be noted that, if the M first function values are positive values, the first function value corresponding to the Mₐ^{th} first region is the second smallest value among the M first function values. If the M first function values are negative values, the first function value corresponding to the Mₐ^{th} first region is the second largest value among the M first function values.

In a possible example, in terms of the first function value, a difference between a first function value corresponding to each of the (A-1) first regions and the first function value corresponding to the Mₐ^{th} first region is less than a third threshold. For example, the third threshold is denoted as ζ. The third threshold is 0.5. If the first function value corresponding to the Mₐ^{th} first region is 0.2, all first regions whose first function values are less than 0.7 belong to the (A-1) first regions.

Alternatively, in another possible example, in terms of a geographical location, each of the (A-1) first regions is adjacent to the Mₐ^{th} first region.

It should be noted that a value of A may be determined by the terminal device. Alternatively, the value of A may be determined by the terminal device. In this case, this application further includes the following operation: The network device sends indication information 1 to the terminal device. Correspondingly, the terminal device receives the indication information 1 from the network device. The indication information 1 indicates the value of A, so that the terminal device selects, based on the value of A, the first region that meets the quantity requirement.

It should be noted that the third threshold may be determined by the terminal device. Alternatively, the third threshold may be determined by the terminal device. In this case, this application further includes the following operation: The network device sends indication information 2 to the terminal device. Correspondingly, the terminal device receives the indication information 2 from the network device. The indication information 2 indicates the third threshold, so that the terminal device selects, based on the third threshold, a first region that meets the configuration requirement.

It should be understood that the foregoing example 1 to example 4 are merely examples of the process of determining the P third regions. Certainly, the P third regions may alternatively be determined in another manner. This is not limited in this application.

After receiving the second request, the network device sends the radio frequency channel data of the P third regions to the terminal device. Correspondingly, the terminal device receives the radio frequency channel data of the P third regions from the network device. The terminal device determines, based on the radio frequency channel data of the P third regions, whether to request radio frequency channel data of a finer granularity region. This is similar to the descriptions of S403. Alternatively, the terminal device determines, based on the radio frequency channel data of the P third regions, whether to send the first instruction to stop transmitting the radio frequency channel data. This is similar to the descriptions of S405.

In other words, even if the 'region mis-identification' phenomenon occurs, the terminal device can return to a previous level or return to another level, to re-determine a region in which the terminal device is located. This implements accurate positioning.

It is easily understood that, in this application, the second threshold, the level threshold, and the resolution threshold are collectively referred to as condition information, or indicated by condition information. The condition information may be determined by the terminal device. Alternatively, the condition information may be determined by the network device. In this case, this application further includes the following operation: The network device sends the condition information to the terminal device. Correspondingly, the terminal device receives the condition information from the network device, so that the terminal device performs the foregoing determining based on the condition information, for example, whether to send the first request, the first instruction, or the second request.

It is easily understood that, unless otherwise specified, mutual reference may be made between same or similar parts of embodiments. In embodiments of this application and implementations/implementation methods/realization methods in embodiments, unless otherwise specified or a logical conflict occurs, terms and/or descriptions are consistent and may be mutually referenced between different embodiments and between the implementations/implementation methods/realization methods in embodiments. Technical features in the different embodiments and the implementations/implementation methods/realization methods in embodiments may be combined to form a new embodiment, implementation, implementation method, or realization method based on an internal logical relationship thereof. The following implementations of this application are not intended to limit the protection scope of this application.

It may be understood that, in the foregoing embodiments, the methods and/or steps implemented by the terminal device may alternatively be implemented by a component (for example, a processor, a chip, a chip system, a circuit, a logical module, or software) that may be used in the terminal device. The chip system may include a chip, or the chip system may include a chip and another discrete component.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the communication apparatus may be obtained through division based on the foregoing method embodiment. For example, the functional modules may be obtained through division corresponding to various functions, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used.

Optionally, FIG. 12 is a diagram of a structure of a communication apparatus 1200. The communication apparatus 1200 includes a processing module 1201 and a transceiver module 1202.

For example, the communication apparatus 1200 may be configured to implement a function of the foregoing terminal device.

In some embodiments, the communication apparatus 1200 may further include a storage module (not shown in FIG. 12), configured to store program instructions and data.

In some embodiments, the transceiver module 1202 may also be referred to as a transceiver unit, and is configured to implement a sending function and/or a receiving function. The transceiver module 1202 may include a transceiver circuit, a transceiver machine, a transceiver, or a communication interface.

In some embodiments, the transceiver module 1202 may include a receiving module and a sending module, respectively configured to perform receiving steps and sending steps performed by the terminal device in the foregoing method embodiments, and/or configured to support other processes of the technologies described in this specification. The processing module 1201 may be configured to perform processing (for example, determining) steps performed by the terminal device in the foregoing method embodiments, and/or configured to support other processes of the technologies described in this specification.

For example, when the communication apparatus 1200 is configured to implement the function of the terminal device,
the transceiver module 1202 is configured to receive radio frequency channel data of M first regions, where M is an integer greater than or equal to 2,
the processing module 1201 is configured to control, based on the radio frequency channel data of the M first regions, the transceiver module 1202 to send a first request,
the transceiver module 1202 is further configured to send the first request, where the first request is used to request radio frequency channel data of N second regions, N is an integer greater than or equal to 2, the N second regions are determined based on the M first regions, and an area of each of the M first regions is greater than an area of each of the N second regions, and
the transceiver module 1202 is further configured to receive the radio frequency channel data of the N second regions.

In a possible design, the transceiver module 1202 is further configured to receive first information, where the first information indicates a value of K.

In a possible design, the transceiver module 1202 is further configured to receive second information, where the second information indicates a first threshold.

In a possible design, that the processing module 1201 is configured to control, based on the radio frequency channel data of the M first regions, the transceiver module 1202 to send the first request includes: controlling the transceiver module 1202 to send the first request under a first condition.

The first condition includes at least one of the following:
First item: M first function values are positive values, and a smallest value among the M first function values is greater than a second threshold. Alternatively, M first function values are negative values, and a largest value among the M first function values is less than a second threshold. Alternatively, a smallest value in absolute values of M first function values is greater than a second threshold. An Mᵢ^{th} first function value among the M first function values represents a difference between first measurement data and radio frequency channel data of an Mᵢ^{th} first region among the M first regions, the first measurement data indicates a signal measurement result, and Mᵢ is an integer that ranges from 1 to M.
Second item: A level number corresponding to the M first regions is less than a level threshold.
Third item: Level resolution corresponding to the M first regions is lower than a resolution threshold, where the level resolution corresponding to the M first regions indicates a region size of each of the M first regions.

In a possible design, the transceiver module 1202 is further configured to send a first instruction under a second condition, where
the first instruction instructs to stop transmitting radio frequency channel data of a third geographic region, and the third geographic region includes a geographic region covered by each of the M first regions.

The second condition includes at least one of the following:
First item: N second function values are positive values, and a smallest value in the N second function values is less than or equal to the second threshold. Alternatively, N second function values are negative values, and a largest value in the N second function values is greater than or equal to the second threshold. Alternatively, a smallest value in absolute values of N second function values is less than or equal to the second threshold.

An Nᵢ^{th} second function value in the N second function values represents a difference between the first measurement data and radio frequency channel data of an Nᵢ^{th} second region in the N second regions, the first measurement data indicates the signal measurement result, and Nᵢ is an integer that ranges from 1 to N.

Second item: A level number corresponding to the N second regions is equal to the level threshold.

Third item: Level resolution corresponding to the N second regions is equal to the resolution threshold, where the level resolution corresponding to the N second regions indicates a region size of each of the N second regions.

In a possible design, the transceiver module 1202 is further configured to send a second request under a third condition, where
the second request is used to request radio frequency channel data of P third regions, P is a positive integer, the P third regions are determined based on the N second regions, and a level corresponding to the P third regions is lower than or equal to a level corresponding to the N second regions.

The third condition includes: N second function values are positive values, and a smallest value in the N second function values is greater than the second threshold; or N second function values are negative values, and a largest value in the N second function values is less than the second threshold; or a smallest value in absolute values of N second function values is greater than the second threshold. An Nᵢ^{th} second function value in the N second function values represents a difference between the first measurement data and radio frequency channel data of an Nᵢ^{th} second region in the N second regions, the first measurement data indicates the signal measurement result, and Nᵢ is an integer that ranges from 1 to N.

The third condition further includes: A level number corresponding to the N second regions is equal to the level threshold, or level resolution corresponding to the N second regions is equal to the resolution threshold, where the level resolution corresponding to the N second regions indicates a region size of each of the N second regions.

In a possible design, the transceiver module 1202 is further configured to receive condition information. The condition information indicates at least one of the following: the second threshold, the level threshold, or the resolution threshold.

In a possible design, the transceiver module 1202 is further configured to send third information before the radio frequency channel data of the M first regions is received, where the third information includes at least one of the following:
first item: the level number corresponding to the M first regions; or
second item: the level resolution corresponding to the M first regions, where the level resolution corresponding to the M first regions indicates the region size of each of the M first regions; or
third item: region information of the third geographic region, where the third geographic region includes the geographic region covered by each of the M first regions.

For example, when the communication apparatus 1200 is configured to implement a function of the foregoing network device,
the transceiver module 1202 is configured to send radio frequency channel data of M first regions, where M is an integer greater than or equal to 2,
the transceiver module 1202 is further configured to receive a first request, where the first request is used to request radio frequency channel data of N second regions, N is an integer greater than or equal to 2, the N second regions are determined based on the M first regions, a level corresponding to the N second regions is higher than a level corresponding to the M first regions, and the first request is determined based on the radio frequency channel data of the M first regions; and
the transceiver module 1202 is further configured to send the radio frequency channel data of the N second regions.

In a possible design, the transceiver module 1202 is further configured to send first information, where the first information indicates a value of K.

In a possible design, the transceiver module 1202 is further configured to send second information, where the second information indicates a first threshold, and the first threshold is used to determine K first regions.

In a possible design, that the transceiver module 1202 is configured to send the radio frequency channel data of the N second regions includes: sending the radio frequency channel data of the N second regions under a first condition.

The first condition includes at least one of the following:
First item: M first function values are positive values, and a smallest value among the M first function values is greater than a second threshold. Alternatively, M first function values are negative values, and a largest value among the M first function values is less than a second threshold. Alternatively, a smallest value in absolute values of M first function values is greater than a second threshold. An Mᵢ^{th} first function value among the M first function values represents a difference between first measurement data and radio frequency channel data of an Mᵢ^{th} first region among the M first regions, the first measurement data indicates a signal measurement result, and Mᵢ is an integer that ranges from 1 to M.
Second item: A level number corresponding to the M first regions is less than a level threshold.
Third item: Level resolution corresponding to the M first regions is lower than a resolution threshold, where the level resolution corresponding to the M first regions indicates a region size of each of the M first regions.

In a possible design, the transceiver module 1202 is further configured to receive a first instruction after the radio frequency channel data of the N second regions is sent, where the first instruction instructs to stop transmitting radio frequency channel data of a third geographic region, and the third geographic region includes a geographic region covered by each of the M first regions.

In a possible design, the transceiver module 1202 is further configured to receive a second request after the radio frequency channel data of the N second regions is sent, where the second request is used to request radio frequency channel data of P third regions, P is a positive integer, the P third regions are determined based on the N second regions, and a level corresponding to the P third regions is lower than the level corresponding to the N second regions.

In a possible design, the transceiver module 1202 is further configured to receive third information before the radio frequency channel data of the M first regions is sent, where the third information includes at least one of the following:
first item: the level number corresponding to the M first regions; or
second item: the level resolution corresponding to the M first regions, where the level resolution corresponding to the M first regions indicates the region size of each of the M first regions; or
third item: region information of the third geographic region, where the third geographic region includes the geographic region covered by each of the M first regions.

That the transceiver module 1202 is configured to send the radio frequency channel data of the M first regions includes: sending the radio frequency channel data of the M first regions based on the third information.

All related content of the steps in the foregoing method embodiments may be cited in function descriptions of the corresponding functional modules. Details are not described herein again.

In this application, the communication apparatus 1200 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 1200 in FIG. 12 is a chip or a chip system, a function/implementation process of the transceiver module 1202 may be implemented via an input/output interface (or a communication interface) of the chip or the chip system, and a function/implementation process of the processing module 1201 may be implemented via a processor (or a processing circuit) of the chip or the chip system.

The communication apparatus 1200 provided in this embodiment may perform the foregoing methods. Therefore, for technical effect that can be achieved by the communication apparatus 1200, refer to the foregoing method embodiments. Details are not described herein again.

In a possible product form, the terminal device in embodiments of this application may be alternatively implemented via the following: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

In another possible product form, the terminal device in embodiments of this application may be implemented via a general bus architecture. For ease of description, refer to FIG. 13. FIG. 13 is a diagram of a structure of a communication apparatus 1300 according to an embodiment of this application. The communication apparatus 1300 includes a processor 1301 and a transceiver 1302. The communication apparatus 1300 may be a terminal device, or a chip or a chip system in a terminal device. FIG. 13 shows only main components of the communication apparatus 1300. In addition to the processor 1301 and the transceiver 1302, the communication apparatus may further include a memory 1303 and an input/output apparatus (which is not shown in the figure).

Optionally, the processor 1301 is mainly configured to: process a communication protocol and communication data, control the entire communication apparatus, execute a software program, and process data of the software program. The memory 1303 is mainly configured to store the software program and data. The transceiver 1302 may include a radio frequency circuit and an antenna. The radio frequency circuit is mainly configured to perform conversion between a baseband signal and a radio frequency signal, and process the radio frequency signal. The antenna is mainly configured to receive/send a radio frequency signal in a form of an electromagnetic wave. The input/output apparatus, for example, a touchscreen, a display, or a keyboard, is mainly configured to: receive data input by a user and output data to the user.

Optionally, the processor 1301, the transceiver 1302, and the memory 1303 may be connected through a communication bus.

After the communication apparatus is powered on, the processor 1301 may read the software program from the memory 1303, interpret and execute instructions of the software program, and process the data of the software program. When data needs to be sent wirelessly, the processor 1301 performs baseband processing on the to-be-sent data, and then outputs a baseband signal to the radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 1301. The processor 1301 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 1200 may be in a form of the communication apparatus 1300 shown in FIG. 13.

In an example, a function/implementation process of the processing module 1201 in FIG. 12 may be implemented by the processor 1301 in the communication apparatus 1300 shown in FIG. 13 by invoking computer-executable instructions stored in the memory 1303, and a function/implementation process of the transceiver module 1202 in FIG. 12 may be implemented by the transceiver 1302 in the communication apparatus 1300 shown in FIG. 13.

In still another possible product form, the terminal device in this application may use a composition structure shown in FIG. 14, or include components shown in FIG. 14. FIG. 14 is a composition diagram of a communication apparatus 1400 according to this application. The communication apparatus 1400 may be the terminal device, or a module, a chip, or a system-on-a-chip in the terminal device.

As shown in FIG. 14, the communication apparatus 1400 includes at least one processor 1401 and at least one communication interface (in FIG. 14, only an example in which one communication interface 1402 and one processor 1401 are included is used for description). Optionally, the communication apparatus 1400 may further include a communication bus 1405, a power supply circuit 1404, and a memory 1403.

The processor 1401 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1401 may be another apparatus having a processing function, for example, a circuit, a device, or a software module. This is not limited.

The communication bus 1405 is configured to connect different components of the communication apparatus 1400, so that the different components can communicate with each other. The communication bus 1405 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 14, but this does not mean that there is only one bus or only one type of bus.

The communication interface 1402 is configured to communicate with another device or a communication network. For example, the communication interface 1402 may be a module, a circuit, a transceiver, or any apparatus that can implement communication. Optionally, the communication interface 1402 may alternatively be an input/output interface located in the processor 1401, to implement signal input and signal output of the processor.

The memory 1403 may be an apparatus having a storage function, and is configured to store instructions and/or data. The instructions may be a computer program.

For example, the memory 1403 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), or a magnetic disk storage medium or another magnetic storage device. This is not limited.

It should be noted that the memory 1403 may exist independently of the processor 1401, or may be integrated with the processor 1401. The memory 1403 may be located inside the communication apparatus 1400, or may be located outside the communication apparatus 1400. This is not limited. The processor 1401 may be configured to execute the instructions stored in the memory 1403, to implement the methods provided in the foregoing embodiments of this application.

In an optional implementation, the communication apparatus 1400 may further include an output device and an input device. The output device communicates with the processor 1401, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 1401, and may receive an input from a user in a plurality of manners. For example, the input device may be a mouse, a keyboard, a touchscreen device, or a sensor device.

In some embodiments, in hardware implementation, a person skilled in the art may figure out that the communication apparatus 1200 shown in FIG. 12 may be in a form of the communication apparatus 1400 shown in FIG. 14.

In an example, a function/implementation process of the processing module 1201 in FIG. 12 may be implemented by the processor 1401 in the communication apparatus 1400 shown in FIG. 14 by invoking computer-executable instructions stored in the memory 1403, and a function/implementation process of the transceiver module 1202 in FIG. 12 may be implemented by the communication interface 1402 in the communication apparatus 1400 shown in FIG. 14.

It should be noted that the structure shown in FIG. 14 does not constitute a specific limitation on the terminal device. For example, in some other embodiments of this application, the terminal device may include more or fewer components than those shown in the figure, some components may be combined, some components may be split, or the components may be differently arranged. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the memory may alternatively not be in the communication apparatus.

In another possible implementation, the communication apparatus further includes an interface circuit. The interface circuit is a code/data read/write interface circuit, and the interface circuit is configured to receive computer-executable instructions (the computer-executable instructions are stored in the memory, and may be directly read from the memory, or may be read via another component) and send the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores a computer program or instructions; and when the computer program or the instructions are executed by a computer, the function in any one of the foregoing method embodiments is implemented.

This application further provides a computer program product. When the computer program product is executed by a computer, the function in any one of the foregoing method embodiments is implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, the apparatus, and the method described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, that is, may be located in one position, or may be distributed on a plurality of network units. The components displayed as units may or may not be physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatus.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and the accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of the claims of this application and equivalent technologies thereof.

## Claims

1. A communication method, comprising:
receiving radio frequency channel data of M first regions, wherein M is an integer greater than or equal to 2;
sending a first request based on the radio frequency channel data of the M first regions, wherein the first request is used to request radio frequency channel data of N second regions, N is an integer greater than or equal to 2, the N second regions are determined based on the M first regions, and an area of each of the M first regions is greater than an area of each of the N second regions; and
receiving the radio frequency channel data of the N second regions.

2. The method according to claim 1, wherein
that the N second regions are determined based on the M first regions comprises:
a geographic region constituted by K first regions in the M first regions is a first geographic region, wherein each of the K first regions overlaps one of the N second regions, and K is a positive integer less than M;
a geographic region constituted by the N second regions is a second geographic region; and
the first geographic region is the same as the second geographic region; or
the first geographic region is different from the second geographic region, and the first geographic region comprises the second geographic region; or
the first geographic region is different from the second geographic region, and the second geographic region comprises the first geographic region.

3. The method according to claim 2, wherein
sending the first request based on the radio frequency channel data of the M first regions comprises:
determining M first function values based on the radio frequency channel data of the M first regions, wherein an Mᵢ^{th} first function value among the M first function values represents a difference between first measurement data and radio frequency channel data of an Mᵢ^{th} first region among the M first regions, the first measurement data indicates a signal measurement result, and Mᵢ is an integer that ranges from 1 to M;
determining the K first regions based on the M first function values; and
sending the first request based on the K first regions.

4. The method according to any one of claims 1 to 3, wherein
sending the first request based on the radio frequency channel data of the M first regions comprises:
sending the first request under a first condition, wherein
the first condition comprises at least one of the following:
a smallest value among the M first function values is greater than a second threshold, wherein the Mᵢ^{th} first function value among the M first function values represents the difference between the first measurement data and the radio frequency channel data of the Mᵢ^{th} first region among the M first regions, the first measurement data indicates the signal measurement result, and Mᵢ is the integer that ranges from 1 to M; or
a level number corresponding to the M first regions is less than a level threshold; or
level resolution corresponding to the M first regions is lower than a resolution threshold, wherein the level resolution corresponding to the M first regions indicates a region size of each of the M first regions.

5. The method according to any one of claims 1 to 4, wherein
the method further comprises: sending a first instruction under a second condition, wherein
the first instruction instructs to stop transmitting radio frequency channel data of a third geographic region, and the third geographic region comprises a geographic region covered by each of the M first regions; and
the second condition comprises at least one of the following:
a smallest value in N second function values is less than or equal to the second threshold, wherein an Nᵢ^{th} second function value in the N second function values represents a difference between the first measurement data and radio frequency channel data of an Nᵢ^{th} second region in the N second regions, the first measurement data indicates the signal measurement result, and Nᵢ is an integer that ranges from 1 to N; or
a level number corresponding to the N second regions is equal to the level threshold; or
level resolution corresponding to the N second regions is equal to the resolution threshold, wherein the level resolution corresponding to the N second regions indicates a region size of each of the N second regions.

6. The method according to any one of claims 1 to 4, wherein the method is applied to a terminal device;
the method further comprises: sending a second request under a third condition, wherein
the second request is used to request radio frequency channel data of P third regions, P is a positive integer, the P third regions are determined based on the N second regions, and a level corresponding to the P third regions is lower than or equal to a level corresponding to the N second regions;
the third condition comprises: a smallest value in N second function values is greater than the second threshold, wherein an Nᵢ^{th} second function value in the N second function values represents a difference between the first measurement data and radio frequency channel data of an Nᵢ^{th} second region in the N second regions, the first measurement data indicates the signal measurement result, and Nᵢ is an integer that ranges from 1 to N; and
the third condition further comprises: a level number corresponding to the N second regions is equal to the level threshold, or level resolution corresponding to the N second regions is equal to the resolution threshold, wherein the level resolution corresponding to the N second regions indicates a region size of each of the N second regions.

7. The method according to any one of claims 1 to 6, wherein before receiving the radio frequency channel data of the M first regions, the method further comprises: sending third information, wherein
the third information comprises at least one of the following:
the level number corresponding to the M first regions; or
the level resolution corresponding to the M first regions, wherein the level resolution corresponding to the M first regions indicates the region size of each of the M first regions; or
region information of the third geographic region, wherein the third geographic region comprises the geographic region covered by each of the M first regions.

8. A communication method, comprising:
sending radio frequency channel data of M first regions, wherein M is an integer greater than or equal to 2;
receiving a first request, wherein the first request is used to request radio frequency channel data of N second regions, N is an integer greater than or equal to 2, the N second regions are determined based on the M first regions, an area of each of the M first regions is greater than an area of each of the N second regions, and the first request is determined based on the radio frequency channel data of the M first regions; and
sending the radio frequency channel data of the N second regions.

9. The method according to claim 8, wherein
that the N second regions are determined based on the M first regions comprises:
a geographic region constituted by K first regions in the M first regions is a first geographic region, wherein each of the K first regions overlaps one of the N second regions, and K is a positive integer less than M;
a geographic region constituted by the N second regions is a second geographic region; and
the first geographic region is the same as the second geographic region; or
the first geographic region is different from the second geographic region, and the first geographic region comprises the second geographic region; or
the first geographic region is different from the second geographic region, and the second geographic region comprises the first geographic region.

10. The method according to claim 8 or 9, wherein
sending the radio frequency channel data of the N second regions comprises:
sending the radio frequency channel data of the N second regions under a first condition, wherein
the first condition comprises at least one of the following:
a smallest value in M first function values is greater than a second threshold, wherein an Mᵢ^{th} first function value among the M first function values represents a difference between first measurement data and radio frequency channel data of an Mᵢ^{th} first region among the M first regions, the first measurement data indicates a signal measurement result, and Mᵢ is an integer that ranges from 1 to M; or
a level number corresponding to the M first regions is less than a level threshold; or
level resolution corresponding to the M first regions is lower than a resolution threshold, wherein the level resolution corresponding to the M first regions indicates a region size of each of the M first regions.

11. The method according to any one of claims 8 to 10, wherein after sending the radio frequency channel data of the N second regions, the method further comprises:
receiving a first instruction, wherein the first instruction instructs to stop transmitting radio frequency channel data of a third geographic region, and the third geographic region comprises a geographic region covered by each of the M first regions.

12. The method according to any one of claims 8 to 10, wherein after sending the radio frequency channel data of the N second regions, the method further comprises: receiving a second request, wherein
the second request is used to request radio frequency channel data of P third regions, and P is a positive integer; and
the P third regions are determined based on the N second regions, and a level corresponding to the P third regions is lower than a level corresponding to the N second regions;

13. The method according to any one of claims 8 to 12, wherein before sending the radio frequency channel data of the M first regions, the method further comprises:
receiving third information, wherein the third information comprises at least one of the following:
the level number corresponding to the M first regions; or
the level resolution corresponding to the M first regions, wherein the level resolution corresponding to the M first regions indicates the region size of each of the M first regions; or
region information of the third geographic region, wherein the third geographic region comprises the geographic region covered by each of the M first regions; and
sending the radio frequency channel data of the M first regions comprises: sending the radio frequency channel data of the M first regions based on the third information.

14. The method according to any one of claims 1 to 13, wherein
the radio frequency channel data of the Mᵢ^{th} first region among the M first regions at least indicates a status of a radio frequency channel Mᵢ, the radio frequency channel Mᵢ is a radio frequency signal between a terminal device and a network device, the terminal device is located at an Mᵢ^{th} first reference point, the Mᵢ^{th} first reference point is located in the Mᵢ^{th} first region, and Mᵢ is the integer that ranges from 1 to M; and/or
radio frequency channel data of an Nᵢ^{th} second region in the N second regions at least indicates a status of a radio frequency channel Nᵢ, the radio frequency channel Nᵢ is a radio frequency signal between the terminal device and the network device, the terminal device is located at an Nᵢ^{th} second reference point, the Nᵢ^{th} second reference point is located in the Nᵢ^{th} second region, and Nᵢ is an integer that ranges from 1 to N.

15. A communication apparatus, comprising:
a transceiver module, configured to receive radio frequency channel data of M first regions, wherein M is an integer greater than or equal to 2; and
a processing module, configured to control, based on the radio frequency channel data of the M first regions, the transceiver module to send a first request, wherein the first request is used to request radio frequency channel data of N second regions, N is an integer greater than or equal to 2, the N second regions are determined based on the M first regions, and an area of each of the M first regions is greater than an area of each of the N second regions, wherein
the transceiver module is further configured to receive the radio frequency channel data of the N second regions.

16. The apparatus according to claim 15, wherein
that the N second regions are determined based on the M first regions comprises:
a geographic region constituted by K first regions in the M first regions is a first geographic region, wherein each of the K first regions overlaps one of the N second regions, and K is a positive integer less than M;
a geographic region constituted by the N second regions is a second geographic region; and
the first geographic region is the same as the second geographic region; or
the first geographic region is different from the second geographic region, and the first geographic region comprises the second geographic region; or
the first geographic region is different from the second geographic region, and the second geographic region comprises the first geographic region.

17. The apparatus according to claim 16, wherein
that the processing module is configured to control, based on the radio frequency channel data of the M first regions, the transceiver module to send the first request comprises:
determining M first function values based on the radio frequency channel data of the M first regions, wherein an Mᵢ^{th} first function value among the M first function values represents a difference between first measurement data and radio frequency channel data of an Mᵢ^{th} first region among the M first regions, the first measurement data indicates a signal measurement result, and Mᵢ is an integer that ranges from 1 to M;
determining the K first regions based on the M first function values; and
controlling, based on the K first regions, the transceiver module to send the first request.

18. The apparatus according to any one of claims 15 to 17, wherein
that the processing module is configured to control, based on the radio frequency channel data of the M first regions, the transceiver module to send the first request comprises:
under a first condition, controlling the transceiver module to send the first request, wherein
the first condition comprises at least one of the following:
a smallest value among the M first function values is greater than a second threshold, wherein the Mᵢ^{th} first function value among the M first function values represents the difference between the first measurement data and the radio frequency channel data of the Mᵢ^{th} first region among the M first regions, the first measurement data indicates the signal measurement result, and Mᵢ is the integer that ranges from 1 to M; or
a level number corresponding to the M first regions is less than a level threshold; or
level resolution corresponding to the M first regions is lower than a resolution threshold, wherein the level resolution corresponding to the M first regions indicates a region size of each of the M first regions.

19. The apparatus according to any one of claims 15 to 18, wherein the transceiver module is further configured to send a first instruction under a second condition, wherein
the first instruction instructs to stop transmitting radio frequency channel data of a third geographic region, and the third geographic region comprises a geographic region covered by each of the M first regions; and
the second condition comprises at least one of the following:
a smallest value in N second function values is less than or equal to the second threshold, wherein an Nᵢ^{th} second function value in the N second function values represents a difference between the first measurement data and radio frequency channel data of an Nᵢ^{th} second region in the N second regions, the first measurement data indicates the signal measurement result, and Nᵢ is an integer that ranges from 1 to N; or
a level number corresponding to the N second regions is equal to the level threshold; or
level resolution corresponding to the N second regions is equal to the resolution threshold, wherein the level resolution corresponding to the N second regions indicates a region size of each of the N second regions.

20. The apparatus according to any one of claims 15 to 18, wherein the transceiver module is further configured to send a second request under a third condition;
the second request is used to request radio frequency channel data of P third regions, P is a positive integer, the P third regions are determined based on the N second regions, and a level corresponding to the P third regions is lower than or equal to a level corresponding to the N second regions;
the third condition comprises: a smallest value in N second function values is greater than the second threshold, wherein an Nᵢ^{th} second function value in the N second function values represents a difference between the first measurement data and radio frequency channel data of an Nᵢ^{th} second region in the N second regions, the first measurement data indicates the signal measurement result, and Nᵢ is an integer that ranges from 1 to N; and
the third condition further comprises: a level number corresponding to the N second regions is equal to the level threshold, or level resolution corresponding to the N second regions is equal to the resolution threshold, wherein the level resolution corresponding to the N second regions indicates a region size of each of the N second regions.

21. The apparatus according to any one of claims 15 to 20, wherein the transceiver module is further configured to send third information before the radio frequency channel data of the M first regions is received, wherein
the third information comprises at least one of the following:
the level number corresponding to the M first regions; or
the level resolution corresponding to the M first regions, wherein the level resolution corresponding to the M first regions indicates the region size of each of the M first regions; or
region information of the third geographic region, wherein the third geographic region comprises the geographic region covered by each of the M first regions.

22. A communication apparatus, comprising:
a transceiver module, configured to send radio frequency channel data of M first regions, wherein M is an integer greater than or equal to 2, wherein
the transceiver module is further configured to receive a first request, wherein the first request is used to request radio frequency channel data of N second regions, N is an integer greater than or equal to 2, the N second regions are determined based on the M first regions, an area of each of the M first regions is greater than an area of each of the N second regions, and the first request is determined based on the radio frequency channel data of the M first regions; and
the transceiver module is further configured to send the radio frequency channel data of the N second regions.

23. The apparatus according to claim 22, wherein
that the N second regions are determined based on the M first regions comprises:
a geographic region constituted by K first regions in the M first regions is a first geographic region, wherein each of the K first regions overlaps one of the N second regions, and K is a positive integer less than M;
a geographic region constituted by the N second regions is a second geographic region; and
the first geographic region is the same as the second geographic region; or
the first geographic region is different from the second geographic region, and the first geographic region comprises the second geographic region; or
the first geographic region is different from the second geographic region, and the second geographic region comprises the first geographic region.

24. The apparatus according to claim 22 or 23, wherein
that the transceiver module is further configured to send the radio frequency channel data of the N second regions comprises:
sending the radio frequency channel data of the N second regions under a first condition, wherein
the first condition comprises at least one of the following:
a smallest value in M first function values is greater than a second threshold, wherein an Mᵢ^{th} first function value among the M first function values represents a difference between first measurement data and radio frequency channel data of an Mᵢ^{th} first region among the M first regions, the first measurement data indicates a signal measurement result, and Mᵢ is an integer that ranges from 1 to M; or
a level number corresponding to the M first regions is less than a level threshold; or
level resolution corresponding to the M first regions is lower than a resolution threshold, wherein the level resolution corresponding to the M first regions indicates a region size of each of the M first regions.

25. The apparatus according to any one of claims 22 to 24, wherein the transceiver module is further configured to receive a first instruction after sending the radio frequency channel data of the N second regions, wherein the first instruction instructs to stop transmitting radio frequency channel data of a third geographic region, and the third geographic region comprises a geographic region covered by each of the M first regions.

26. The apparatus according to any one of claims 22 to 24, wherein the transceiver module is further configured to receive a second request after sending the radio frequency channel data of the N second regions, wherein the second request is used to request radio frequency channel data of P third regions, and P is a positive integer; and
the P third regions are determined based on the N second regions, and a level corresponding to the P third regions is lower than a level corresponding to the N second regions;

27. The apparatus according to any one of claims 22 to 26, wherein the transceiver module is further configured to receive third information before sending the radio frequency channel data of the M first regions, wherein the third information comprises at least one of the following:
the level number corresponding to the M first regions; or
the level resolution corresponding to the M first regions, wherein the level resolution corresponding to the M first regions indicates the region size of each of the M first regions; or
region information of the third geographic region, wherein the third geographic region comprises the geographic region covered by each of the M first regions; and
that the transceiver module is further configured to send the radio frequency channel data of the M first regions comprises: sending the radio frequency channel data of the M first regions based on the third information.

28. The apparatus according to any one of claims 15 to 27, wherein
the radio frequency channel data of the Mᵢ^{th} first region among the M first regions at least indicates a status of a radio frequency channel Mᵢ, the radio frequency channel Mᵢ is a radio frequency signal between a terminal device and a network device, the terminal device is located at an Mᵢ^{th} first reference point, the Mᵢ^{th} first reference point is located in the Mᵢ^{th} first region, and Mᵢ is the integer that ranges from 1 to M; and/or
radio frequency channel data of an Nᵢ^{th} second region in the N second regions at least indicates a status of a radio frequency channel Nᵢ, the radio frequency channel Nᵢ is a radio frequency signal between the terminal device and the network device, the terminal device is located at an Nᵢ^{th} second reference point, the Nᵢ^{th} second reference point is located in the Nᵢ^{th} second region, and Nᵢ is an integer that ranges from 1 to N.

29. A communication apparatus, wherein the communication apparatus comprises a processor; and the processor is configured to run a computer program or instructions, to enable the communication apparatus to perform the method according to any one of claims 1 to 7 and 14, or enable the communication apparatus to perform the method according to any one of claims 8 to 14.

30. A computer-readable storage medium, wherein the computer-readable storage medium stores computer instructions or a program; and when the computer instructions or the program is run on a computer, the method according to any one of claims 1 to 7 and 14 is performed, or the method according to any one of claims 8 to 14 is performed.

31. A computer program product, wherein the computer program product comprises computer instructions; and when a part or all of the computer instructions are run on a computer, the method according to any one of claims 1 to 7 and 14 is performed, or the method according to any one of claims 8 to 14 is performed.

32. A chip, comprising:
a memory, configured to store computer program instructions; and
a processor, configured to execute the computer program instructions, to enable a communication apparatus comprising the chip to perform the method according to any one of claims 1 to 7 and 14, or to enable a communication apparatus comprising the chip to perform the method according to any one of claims 8 to 14.

33. A communication system, comprising a terminal device and a network device, wherein the terminal device is configured to perform the method according to any one of claims 1 to 7 and 14, and the network device is configured to perform the method according to any one of claims 8 to 14.
